# EUROPEAN PATENT APPLICATION

(11) **EP 4 516 610 A1**
(43) Date of publication of application: **05.03.2025**
(21) Application number: 23893373.3
(22) Date of filing: 14.09.2023
(51) Int. Cl.: B60W 40/09, B60W 50/00, B60W 50/14, B60W 60/00

(54) **STEERING WHEEL HANDS-OFF DETECTION SYSTEM AND METHOD**

(30) Priority: 25.11.2022 CN 202211491328
(71) Applicant: Huawei Technologies Co., Ltd., Shenzhen, Guangdong 518129 (CN)
(72) Inventor: YAO, Haicheng, Shenzhen, Guangdong 518129 (CN); QIAO, Yixiang, Shenzhen, Guangdong 518129 (CN); YE, Jilong, Shenzhen, Guangdong 518129 (CN); ZHAO, Lin, Shenzhen, Guangdong 518129 (CN); LI, Jun, Shenzhen, Guangdong 518129 (CN); HU, Hongwei, Shenzhen, Guangdong 518129 (CN); HUANG, Xueyan, Shenzhen, Guangdong 518129 (CN)
(74) Representative: Grünecker Patent- und Rechtsanwälte PartG mbB
(86) International application number: PCT/CN2023/118733
(87) International publication number: WO 2024/109280

(57) **Abstract**

A steering wheel hands-off detection system is disclosed and is used in the field of autonomous driving technologies. The system in this application includes a first conductive layer, a second conductive layer, an insulation layer, and a processing module. The insulation layer is disposed between the first conductive layer and the second conductive layer, and a distance between the first conductive layer and a surface of a steering wheel is different from a distance between the second conductive layer and the surface of the steering wheel. The processing module is configured to: identify a holding status of the steering wheel based on a ratio of a first capacitance value to a second capacitance value, and further determine, based on the holding status of the steering wheel, whether the steering wheel is in a hands-off state. In this solution, two states of holding the steering wheel without a glove and holding the steering wheel with a glove can be effectively identified based on the ratio of the capacitance values of the two conductive layers, and whether the steering wheel is hands-off is further determined based on the identified holding status of the steering wheel. This ensures that steering wheel hands-off detection can be implemented when the steering wheel is held without a glove and when the steering wheel is held with a glove.

## Description

This application claims priority to Chinese Patent Application No. 202211491328.9, filed with the China National Intellectual Property Administration on November 25, 2022 and entitled "STEERING WHEEL HANDS-OFF DETECTION SYSTEM AND METHOD", which is incorporated herein by reference in its entirety.

### TECHNICAL FIELD

This application relates to the field of autonomous driving technologies, and in particular, to a steering wheel hands-off detection system and method.

### BACKGROUND

Autonomous driving levels for a vehicle may be classified into L1 to L5. Different levels of autonomous driving have different requirements for identifying a status of holding a steering wheel by a hand. In L2 assisted driving, that the hand cannot leave the steering wheel is a safety regulation requirement, and a system should be capable of determining, based on a surface sensor or a built-in sensor of the steering wheel, whether the hand of a user holds the steering wheel. If the system detects that the steering wheel is hands-off (that is, the hand of the user leaves the steering wheel), the system needs to remind the user, and after a hands-off state of the steering wheel lasts for a period of time, the system needs to automatically exit assisted driving or brake, to ensure driving safety of the user. Therefore, in autonomous driving, it is important to accurately detect whether the steering wheel is in a hands-off state.

Currently, a capacitive sensor is usually deployed on a surface of the steering wheel to identify whether the hand of the user holds the steering wheel. Specifically, when the hand of the user touches the surface of the steering wheel, because the hand of the user is conductive, the hand of the user changes electric field distribution of the capacitive sensor on the surface of the steering wheel, causing a capacitance change. In this way, whether the hand of the user holds the steering wheel is identified based on a capacitance change value.

However, in a related technology, after the user wears a glove on the hand, a thick insulation layer is introduced between the hand and the capacitive sensor on the surface of the steering wheel, and it is difficult for the hand of the user to change electric field distribution. Consequently, a capacitance change caused by holding the steering wheel by the hand is not large, and it is difficult to implement steering wheel hands-off detection.

### SUMMARY

This application provides a steering wheel hands-off detection system, to effectively identify two states of holding the steering wheel without a glove and holding the steering wheel with a glove, and determine, based on the identified holding status of the steering wheel, whether the steering wheel is hands-off. This can implement steering wheel hands-off detection in various complex cases.

A first aspect of this application provides a steering wheel hands-off detection system, including a first conductive layer, a second conductive layer, an insulation layer, and a processing module. The insulation layer is disposed between the first conductive layer and the second conductive layer, and a distance between the first conductive layer and a surface of a steering wheel is different from a distance between the second conductive layer and the surface of the steering wheel. For example, the first conductive layer is disposed at an outer layer of the steering wheel, and the second conductive layer is disposed at an inner layer of the steering wheel. Therefore, the distance between the first conductive layer and the surface of the steering wheel is less than the distance between the second conductive layer and the surface of the steering wheel.

The processing module may be deployed on the steering wheel, or deployed in a control system of a vehicle. The processing module is configured to: identify a holding status of the steering wheel based on a ratio of a first capacitance value to a second capacitance value, and further determine, based on the holding status of the steering wheel, whether the steering wheel is in a hands-off state. The first capacitance value is a capacitance value of the first conductive layer, and the second capacitance value is a capacitance value of the second conductive layer.

Specifically, when the steering wheel is directly held by a hand, the hand has greater impact on a capacitance value of a conductive layer closer to the hand, and has smaller impact on a capacitance value of a conductive layer closer to the hand. Therefore, a capacitance ratio of the two conductive layers is also large. When a user wears a glove on the hand and holds the steering wheel, the hand has not-large impact on capacitance values of the two conductive layers. Therefore a capacitance ratio of the two conductive layers is close to each other.

Therefore, in this solution, two states of holding the steering wheel without a glove and holding the steering wheel with a glove can be effectively identified based on the ratio of the capacitance values of the two conductive layers, and whether the steering wheel is hands-off is further determined based on the identified holding status of the steering wheel. This ensures that steering wheel hands-off detection can be implemented when the steering wheel is held without a glove and when the steering wheel is held with a glove.

In a possible implementation, that the processing module is configured to determine, based on a ratio of a first capacitance value to a second capacitance value, whether the steering wheel is in a hands-off state is specifically: The processing module is configured to: determine a first threshold based on the ratio of the first capacitance value to the second capacitance value, and determine, by comparing the first capacitance value or the second capacitance value with the first threshold, whether the steering wheel is in a hands-off state.

When the distance between the first conductive layer and the surface of the steering wheel is less than the distance between the second conductive layer and the surface of the steering wheel, the ratio is positively correlated with the first threshold. That is, a larger ratio of the first capacitance value of the first conductive layer to the second capacitance value of the second conductive layer indicates greater impact of a hand of the driver on the capacitance value of the first conductive layer (that is, the driver does not wear a glove). Therefore, the first threshold may be set to a larger value. A smaller ratio of the first capacitance value of the first conductive layer to the second capacitance value of the second conductive layer indicates smaller impact of the hand of the driver on the capacitance value of the first conductive layer (that is, the driver wears a glove). Therefore, the first threshold may also be set to a smaller value.

Alternatively, when the distance between the first conductive layer and the surface of the steering wheel is greater than the distance between the second conductive layer and the surface of the steering wheel, the ratio is negatively correlated with the first threshold.

In a possible implementation, when the first capacitance value or the second capacitance value is greater than or equal to the first threshold, the processing module is configured to determine that the steering wheel is not in a hands-off state; or when the first capacitance value or the second capacitance value is less than the first threshold, the processing module is configured to determine that the steering wheel is in a hands-off state.

In a possible implementation, the processing module is further configured to control to output alarm information when determining that the steering wheel is in a hands-off state, where the alarm information indicates that the steering wheel is in a hands-off state. For example, the alarm information output controlled by the processing module may be text information, image information, or speech information. For example, the processing module outputs text information through a central control display or a dashboard of the vehicle, and the text information is specifically "Please hold the steering wheel tightly; otherwise, the vehicle will exit autonomous driving within 5 seconds".

In a possible implementation, the first conductive layer and the second conductive layer are flexible conductive layers, and the insulation layer is a compressible and deformable elastic insulation layer.

In this solution, the first conductive layer, the second conductive layer, and the insulation layer are made of deformable materials. When the driver wears a glove and correctly holds the steering wheel with multiple fingers, the first conductive layer, the second conductive layer, and the insulation layer can generate compression deformation, so that the first conductive layer and the second conductive layer each output a not-low capacitance value. This improves accuracy of capacitance value detection and ensures accuracy of identifying the final steering wheel hands-off state.

In a possible implementation, the first conductive layer includes multiple first parts, and there is a spacing between any two adjacent parts of the multiple first parts. The second conductive layer includes multiple second parts, and there is a spacing between any two adjacent parts of the multiple second parts. In addition, the multiple first parts and the multiple second parts are mutually staggered.

For example, the multiple first parts at the first conductive layer are a comb structure, that is, the multiple first parts are parallel to each other, and tops of the multiple first parts are connected together in a long-strip structure. That is, the multiple first parts may be considered as multiple tooth-shaped structures in the comb structure. The multiple second parts at the second conductive layer are also a comb structure, that is, the multiple second parts are parallel to each other, and tops of the multiple second parts are connected together in a long-strip structure. That is, the multiple second parts may also be considered as multiple tooth-shaped structures in the comb structure.

In this solution, the first conductive layer and the second conductive layer are disposed as comb structures, and parts between the first conductive layer and the second conductive layer are mutually staggered, so that an overlapping area of the first conductive layer and the second conductive layer in a longitudinal direction can be reduced. This reduces capacitance reading noise of the first conductive layer and the second conductive layer, and improves detection accuracy of the steering wheel hands-off detection system.

In a possible implementation, a length of each of the multiple first parts and the multiple second parts is less than a second threshold, to ensure that touch areas between the two conductive layers and the hand of the driver are as close as possible. The length of each part is a length of the part in a rotation direction of the steering wheel.

In a possible implementation, the first conductive layer includes multiple sub-conductive layers, the multiple sub-conductive layers are not electrically connected to each other, the multiple sub-conductive layers are distributed in different regions on the steering wheel along a rotation direction of the steering wheel, and the first capacitance value is a largest capacitance value of multiple capacitance values corresponding to the multiple sub-conductive layers; and the processing module is further configured to control to output a first instruction based on that largest values of capacitance values of two adjacent sub-conductive layers within preset time are both greater than or equal to a third threshold.

In this solution, multiple sub-conductive layers are deployed at different positions on the steering wheel, so that a position of the steering wheel held by the hand of the driver can be determined based on capacitance values output by the multiple sub-conductive layers, and interaction between the driver and the vehicle is triggered based on a change of the holding position of the hand of the driver. In this way, the driver interacts with the vehicle without taking the hand of the driver off the steering wheel, which ensures driving safety.

In a possible implementation, the processing module is further configured to control to output a first sub-instruction or a second sub-instruction based on positions of a first sub-conductive layer and a second sub-conductive layer, where the first instruction includes the first sub-instruction and the second sub-instruction; and
the first sub-conductive layer and the second sub-conductive layer are the two adjacent sub-conductive layers, and time at which a largest capacitance value of the first sub-conductive layer occurs within the preset time is earlier than time at which a largest capacitance value of the second sub-conductive layer occurs within the preset time.

In this solution, multiple sub-conductive layers are deployed at different positions on the steering wheel, so that a sliding direction of the hand of the driver on the steering wheel can be obtained based on capacitance values output by the multiple sub-conductive layers, and a corresponding instruction can be triggered to output. This can ensure driving safety, ensure diversified interaction between the driver and the vehicle, and meet diversified user requirements.

In a possible implementation, the first instruction includes: answering an incoming call, declining an incoming call, switching a song, adjusting volume, adjusting an air conditioner temperature, lifting/lowering a window of a vehicle, or adjusting a seat.

In a possible implementation, when the processing module determines that the steering wheel is not in a hands-off state, the processing module is further configured to control to output a second instruction based on a magnitude of a holding force on the steering wheel or a change status of a magnitude of a holding force on the steering wheel within a preset time range.

In this solution, the processing module in the steering wheel hands-off detection system determines a status or an intention of the driver by detecting a strength of holding the steering wheel by the hand of the driver, to control to output another instruction. This can implement more interaction manners between the driver and the vehicle.

In a possible implementation, the processing module is further configured to: determine a mapping coefficient based on the ratio, and determine the magnitude of the holding force on the steering wheel based on the mapping coefficient and the first capacitance value.

A second aspect of this application provides a steering wheel hands-off detection method, applied to a steering wheel hands-off detection system. The system includes a first conductive layer, a second conductive layer, an insulation layer, and a processing module. The insulation layer is disposed between the first conductive layer and the second conductive layer, and a distance between the first conductive layer and a surface of a steering wheel is different from a distance between the second conductive layer and the surface of the steering wheel.

The method includes: obtaining a first capacitance value and a second capacitance value, where the first capacitance value is a capacitance value of the first conductive layer, and the second capacitance value is a capacitance value of the second conductive layer; and
determining, based on a ratio of the first capacitance value to the second capacitance value, whether the steering wheel is in a hands-off state.

In a possible implementation, the determining, based on a ratio of the first capacitance value to the second capacitance value, whether the steering wheel is in a hands-off state is specifically:
determining a first threshold based on the ratio of the first capacitance value to the second capacitance value, and determining, by comparing the first capacitance value or the second capacitance value with the first threshold, whether the steering wheel is in a hands-off state, where
when the distance between the first conductive layer and the surface of the steering wheel is less than the distance between the second conductive layer and the surface of the steering wheel, the ratio is positively correlated with the first threshold; or
when the distance between the first conductive layer and the surface of the steering wheel is greater than the distance between the second conductive layer and the surface of the steering wheel, the ratio is negatively correlated with the first threshold.

In a possible implementation, the determining, by comparing the first capacitance value or the second capacitance value with the first threshold, whether the steering wheel is in a hands-off state includes:
when the first capacitance value or the second capacitance value is greater than or equal to the first threshold, determining that the steering wheel is not in a hands-off state; or
when the first capacitance value or the second capacitance value is less than the first threshold, determining that the steering wheel is in a hands-off state.

In a possible implementation, the method further includes:
when it is determined that the steering wheel is in a hands-off state, controlling to output alarm information, where the alarm information indicates that the steering wheel is in a hands-off state.

In a possible implementation, the first conductive layer includes multiple sub-conductive layers, the multiple sub-conductive layers are not electrically connected to each other, the multiple sub-conductive layers are distributed in different regions on the steering wheel along a rotation direction of the steering wheel, and the first capacitance value is a largest capacitance value of multiple capacitance values corresponding to the multiple sub-conductive layers; and
the method further includes:
controlling to output a first instruction based on that largest values of capacitance values of two adjacent sub-conductive layers within preset time are both greater than or equal to a third threshold.

In a possible implementation, the method further includes:
controlling to output a first sub-instruction or a second sub-instruction based on positions of a first sub-conductive layer and a second sub-conductive layer, where the first instruction includes the first sub-instruction and the second sub-instruction; and
the first sub-conductive layer and the second sub-conductive layer are the two adjacent sub-conductive layers, and time at which a largest capacitance value of the first sub-conductive layer occurs within the preset time is earlier than time at which a largest capacitance value of the second sub-conductive layer occurs within the preset time.

In a possible implementation, the first instruction includes: answering an incoming call, declining an incoming call, switching a song, adjusting volume, adjusting an air conditioner temperature, lifting/lowering a window of a vehicle, or adjusting a seat.

In a possible implementation, the method further includes:
when it is determined that the steering wheel is not in a hands-off state, controlling to output a second instruction based on a magnitude of a holding force on the steering wheel or a change status of a magnitude of a holding force on the steering wheel within a preset time range.

In a possible implementation, the method further includes:
determining a mapping coefficient based on the ratio, and determining the magnitude of the holding force on the steering wheel based on the mapping coefficient and the first capacitance value.

A third aspect of this application provides steering wheel hands-off detection apparatus. The apparatus may include a processor, and the processor is coupled to a memory. The memory stores program instructions. When the program instructions stored in the memory are executed by the processor, the method according to any one of the second aspect or the implementations of the second aspect is implemented. For steps performed by the processor in the possible implementations of the second aspect, refer to the first aspect. Details are not described herein again.

A fourth aspect of this application provides a computer-readable storage medium. The computer-readable storage medium stores a computer program, and when the computer program is run on a computer, the computer performs the method according to any one of the second aspect or the implementations of the second aspect.

A fifth aspect of this application provides a circuit system, where the circuit system includes a processing circuit, and the processing circuit is configured to perform the method according to any one of the second aspect or the implementations of the second aspect.

A sixth aspect of this application provides a computer program product. When the computer program product runs on a computer, the computer is enabled to perform the method according to any one of the second aspect or the implementations of the second aspect.

A seventh aspect of this application provides a chip system. The chip system includes a processor, configured to support a server or a threshold obtaining apparatus in implementing a function according to any one of the second aspect or the implementations of the second aspect, for example, sending or processing data and/or information in the foregoing method. In a possible design, the chip system further includes a memory, and the memory is configured to store program instructions and data that are necessary for a server or a communication device. The chip system may include a chip, or may include a chip and another discrete device.

For beneficial effect of the second aspect to the seventh aspect, refer to the descriptions of the first aspect. Details are not described the herein again.

### BRIEF DESCRIPTION OF DRAWINGS

FIG. 1 is a diagram of identifying, based on a capacitive sensor, whether a hand holds a steering wheel in a related technology;
FIG. 2 is a diagram of comparison between a case in which a glove is not worn and a case in which a glove is worn according to an embodiment of this application;
FIG. 3 is a diagram of comparison between capacitance values in different holding states in a related technology;
FIG. 4 is a diagram of an application scenario of a steering wheel hands-off detection system according to an embodiment of this application;
FIG. 5 is a diagram of a structure of a vehicle 100 according to an embodiment of this application;
FIG. 6 is a diagram of a structure of a computer system 101 in a vehicle according to an embodiment of this application;
FIG. 7 is a diagram of a structure of a steering wheel hands-off detection system according to an embodiment of this application;
FIG. 8 is a diagram of comparison between capacitance values of a steering wheel detection system in different holding states according to an embodiment of this application;
FIG. 9 is a diagram of a working procedure of a steering wheel hands-off detection system according to an embodiment of this application;
FIG. 10 is a diagram of comparison between structures of a steering wheel detection system according to an embodiment of this application;
FIG. 11 is a diagram of a structure of a steering wheel detection system according to an embodiment of this application;
FIG. 12 is a diagram of another structure of a steering wheel detection system according to an embodiment of this application;
FIG. 13 is a diagram of triggering interaction with a vehicle by sliding a hand holding a steering wheel according to an embodiment of this application;
FIG. 14 is another diagram of triggering interaction with a vehicle by sliding a hand holding a steering wheel according to an embodiment of this application;
FIG. 15 is a diagram of a structure of a processing module according to an embodiment of this application;
FIG. 16 is a diagram of a structure of a chip according to an embodiment of this application; and
FIG. 17 is a diagram of a structure of a computer-readable storage medium according to an embodiment of this application.

### DESCRIPTION OF EMBODIMENTS

The following describes embodiments of this application with reference to accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is only a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

For ease of understanding, the following first describes some technical terms used in embodiments of this application.

### (1) Capacitance

Generally, an electric charge move under a force in the electric field. When there is a medium between conductors, electric charge movement is blocked and electric charges are accumulated on the conductor. As a result, the electric charges are accumulated and stored. A quantity of stored electric charges is referred to as capacitance.

Simply speaking, capacitance is a capability to hold electric charges. Any electrostatic field includes many capacitors. If there is an electrostatic field, there will be capacitance. The capacitance is described by the electrostatic field. It is generally considered that an isolated conductor and an infinite distance form capacitance, and conductor grounding is equivalent to connecting to an infinite distance and connecting to the ground as a whole.

### (2) Polydimethylsiloxane (Polydimethylsiloxane, PDMS)

PDMS is a hydrophobic silicone material. PDMS has been used in various fields such as medicine, daily chemical supplies, food, and construction, and derivatives of the PDMS have reached hundreds of types. Commonly used polysiloxanes mainly include polydimethylsilane, cyclomethicone, amino silane, polymethyl benzene silane, polyether polysiloxane copolymer, and the like. Among them, cyclopolydimethylsiloxane is a common polysiloxane.

### (3) Polyurethane (polyurethane, PU)

PU is a high-molecular compound. PU has two types: a polyester type and a polyether type, which can be made into polyurethane plastic (mainly foamed plastic), polyurethane fiber (also referred to as selenon), polyurethane rubber, and elastomer.

### (4) Polyethylene terephthalate (polyethylene glycol terephthalate, PET)

PET is obtained by transesterifying dimethyl terephthalate and ethylene glycol or by esterifying terephthalic acid and ethylene glycol to synthesize bishydroxyethyl terephthalate, and then performing a polycondensation reaction. PET is a crystalline saturated polyester, is a milky white or light yellow, highly crystalline polymer with a smooth and shiny surface, and is a common resin in life.

### (5) Central control screen

Currently, in the field of vehicles, a vehicle-mounted terminal, for example, a vehicle-mounted machine (also referred to as an in-vehicle audio and video entertainment system), may be fastened to a center console of a vehicle, and a screen of the vehicle-mounted terminal may also be referred to as a central control display or a central control screen. In addition, fully digital display is gradually implemented in a cabin of some high-end vehicles, and one or more displays are disposed in the cabin to display a digital dashboard, an in-vehicle entertainment system, and other content. For example, a plurality of displays are disposed in a cabin of the vehicle, for example, a digital dashboard display, a central control screen, a display in front of a passenger in a co-driver seat (also referred to as a passenger in a front seat), a display in front of a passenger in a rear-left seat, and a display in front of a passenger in a rear-right seat.

Autonomous driving is also referred to as unmanned driving, computer driving, or wheel movement, and is a technology in which a computer system is used to assist a driver in driving. Specifically, autonomous driving means a capability of a vehicle to automatically implement driving tasks such as route planning, behavior decision-making, and motion planning (a velocity and track planning). Autonomous driving includes five levels: L1, L2, L3, L4, and L5. L1: Driver assistance. A vehicle provides driving for one operation of the steering wheel and accelerating/decelerating. A human driver is responsible for other driving actions. L2: Partially driving automation. A vehicle provides driving for multiple operations of the steering wheel and accelerating/decelerating. A human driver is responsible for other driving actions. L3: Conditionally driving automation. Most driving operations are performed by a vehicle. A human driver needs to focus on driving for future use. L4: Highly driving automation. All driving operations are performed by a vehicle. A human driver does not need to focus on driving, but a road and an environment are limited. L5: Fully driving automation. All driving operations are performed by a vehicle. A human driver does not need to focus on driving, and a road and an environment are not limited. The autonomous driving vehicle in this application is a vehicle that can implement autonomous driving at L2 or above.

Currently, the autonomous driving vehicle has not implemented fully autonomous driving, and has not replaced driving by a driver. When driving the vehicle automatically, the driver needs to control the steering wheel. If the driver does not hold the steering wheel with a hand (that is, the steering wheel is hands-off), it may be difficult to handle emergencies in time. Therefore, whether the steering wheel is in a hands-off state needs to be detected, to indicate the driver to control the steering wheel.

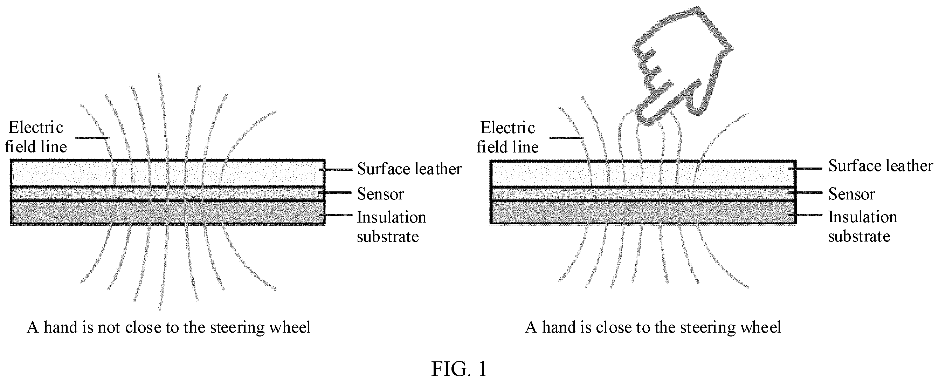

Currently, a capacitive sensor is usually deployed on a surface of the steering wheel to identify whether the hand of the driver holds the steering wheel. Specifically, FIG. 1 is a diagram of identifying, based on a capacitive sensor, whether a hand holds a steering wheel in a related technology. As shown in FIG. 1, the capacitive sensor is usually deployed on a surface of a steering wheel, and a layer of surface leather that is easy for a driver to hold the steering wheel is further deployed on the capacitive sensor, and a layer of insulation substrate is further deployed below the capacitive sensor. When the hand of the driver is not close to the steering wheel, the capacitive sensor has normal electric field distribution. When the hand of the driver is close to and touches the surface of the steering wheel, because the hand of the driver is conductive, the hand of the driver changes electric field distribution of the capacitive sensor on the surface of the steering wheel, causing a capacitance change. In this way, whether the hand of the driver holds the steering wheel is identified based on a capacitance change value.

However, in a related technology, after the driver wears a glove on the hand, a thick insulation layer is introduced between the hand and the capacitive sensor on the surface of the steering wheel, and it is difficult for the hand of the driver to change electric field distribution. Consequently, a capacitance change caused by holding the steering wheel by the hand is not large, and it is difficult to implement steering wheel hands-off detection.

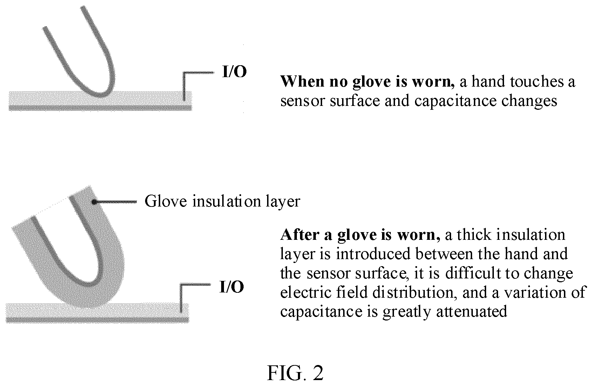

For example, FIG. 2 is a diagram of comparison between a case in which a glove is not worn and a case in which a glove is worn according to this embodiment of this application. As shown in FIG. 2, when a glove is not worn, the hand of the driver directly touches a surface of the capacitive sensor, causing the capacitive sensor to generate a large capacitance value change. After the driver wears a glove on the hand, a thick insulation layer is introduced between the hand and the surface of the capacitive sensor, and it is difficult to change electric field distribution of the capacitive sensor, and a small variation of capacitance is caused.

It may be understood that, for ease of controlling the steering wheel, a posture in which the driver correctly holds the steering wheel is that multiple fingers of the hand simultaneously hold the steering wheel. However, in some cases, a posture in which the driver incorrectly holds the steering wheel may occur. For example, the driver gently places only one finger on the steering wheel. Therefore, in a process of detecting whether the steering wheel is in a hands-off state, it is actually to detect whether the driver holds the steering wheel in a correct posture. For example, when the driver simultaneously holds the steering wheel with multiple fingers of the hand, it needs to be determined that the steering wheel is not in a hands-off state. When the driver does not hold the steering wheel with the hand or only puts one finger on the steering wheel, it needs to be determined that the steering wheel is in a hands-off state.

When the driver only puts one finger on the steering wheel, the capacitance value of the capacitive sensor also changes, but the capacitance value change is not large. Therefore, in the related technology, a large threshold is usually set, and whether the steering wheel is in a hands-off state is determined by comparing a value relationship between the capacitance value of the capacitive sensor and the threshold.

However, the applicant finds through research that, when the driver wears a glove and correctly holds the steering wheel with multiple fingers, the capacitance value change of the capacitive sensor is not large, either. Therefore, in the related technology, when a preset large threshold is used for comparison with the capacitance value, it is easily determined that the steering wheel is in a hands-off state by mistake.

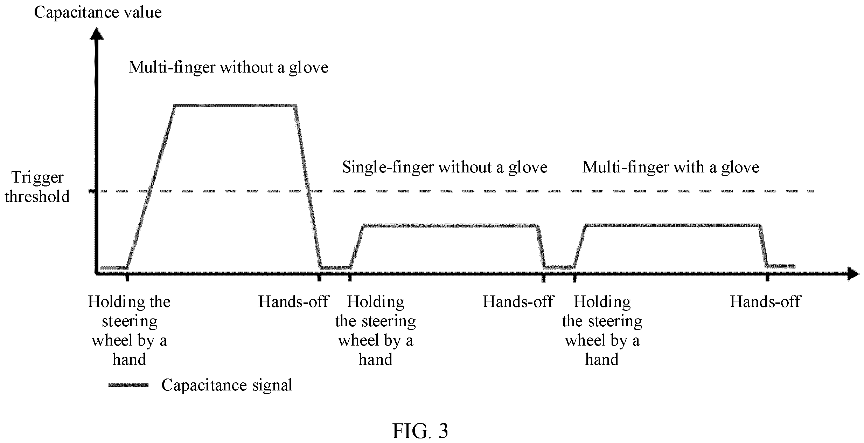

For example, FIG. 3 is a diagram of comparison between capacitance values in different holding states in a related technology. As shown in FIG. 3, in a related technology, when a driver does not wear a glove and holds a steering wheel in a correct holding posture with multiple fingers, a capacitive sensor on the steering wheel can output a high capacitance value; when a driver does not wear a glove and puts a single finger on a steering wheel, a capacitive sensor on the steering wheel outputs a low capacitance value; or when a driver wears a glove and holds a steering wheel with multiple fingers in a correct holding posture, a capacitive sensor on the steering wheel also outputs a low capacitance value. In addition, for the two cases in which the driver does not wear a glove and puts a single finger on the steering wheel, and the driver wears a glove and holds the steering wheel with multiple fingers in a correct holding posture, capacitance values output by the capacitive sensor on the steering wheel are close. In this way, in the related technology, when a high trigger region is set to implement steering wheel hands-off detection, the driver does not usually wear a glove and puts a single finger on the steering wheel, and the driver wears a glove and holds the steering wheel with multiple fingers in a correct holding posture. Both of the two cases are identified as a case in which the steering wheel is in a hand-off state. Consequently, misidentification occurs.

In view of this, an embodiment of this application provides a steering wheel hands-off detection system, to effectively identify two states of holding the steering wheel without a glove and holding the steering wheel with a glove, and select a corresponding threshold based on the identified holding status of the steering wheel to determine whether the steering wheel is hands-off. This can implement steering wheel hands-off detection in various complex cases.

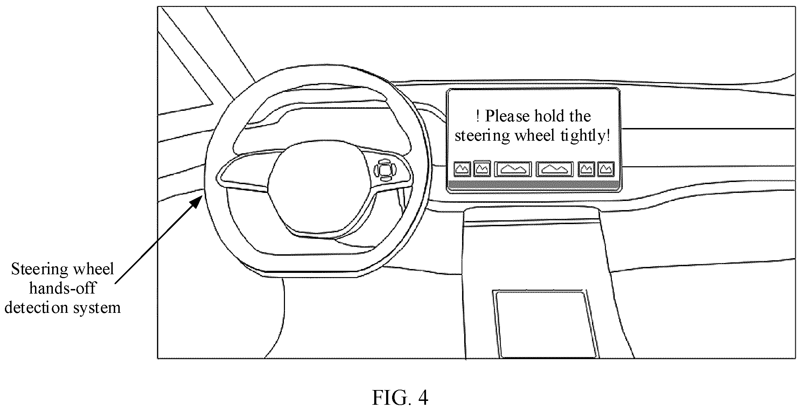

FIG. 4 is a diagram of an application scenario of a steering wheel hands-off detection system according to an embodiment of this application. As shown in FIG. 4, the steering wheel hands-off detection system may be deployed on a steering wheel of a vehicle, and is configured to identify whether the steering wheel is in a hands-off state in a driving process of the vehicle. When the steering wheel hands-off detection system detects that the steering wheel is in a hands-off state, the steering wheel hands-off detection system outputs an alarm signal, so that the vehicle can display reminder information ("! Please hold the steering wheel tightly!" shown in FIG. 4) on a central control screen or a dashboard, or a sound is played to remind a driver to hold the steering wheel.

In addition, a part of a structure (for example, a structure that generates and detects a capacitance signal) in the steering wheel hands-off detection system may be deployed on the steering wheel, and another part of a structure (for example, a structure that identifies a hands-off state based on the capacitance signal) may be deployed in a control system (for example, a central control system of the vehicle) of the vehicle.

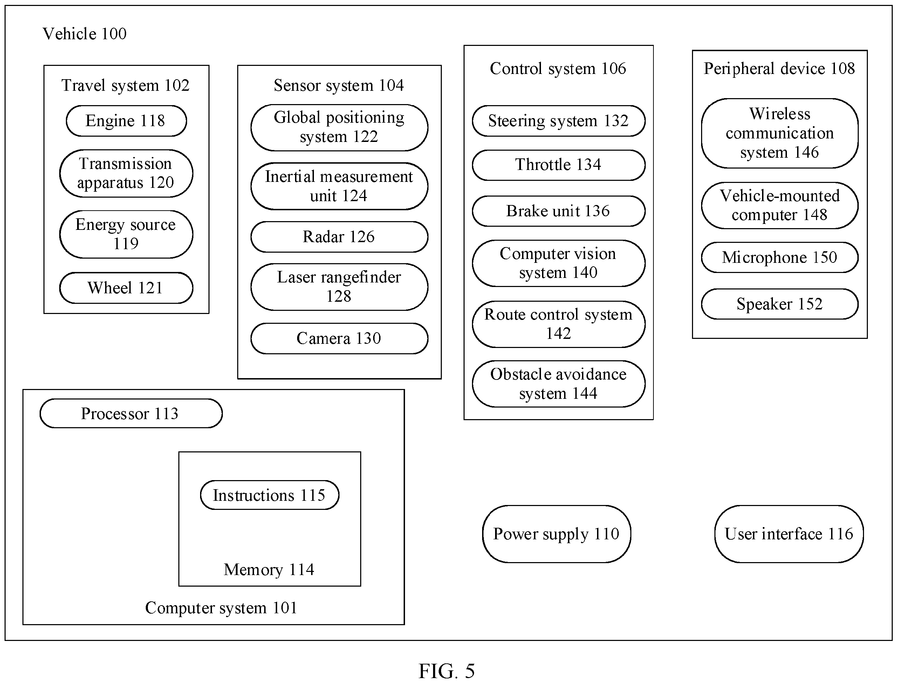

For ease of understanding this solution, a structure of a vehicle provided in this application is described with reference to FIG. 5 in this embodiment of this application. FIG. 5 is a diagram of a structure of a vehicle 100 according to an embodiment of this application.

As shown in FIG. 5, in an embodiment, the vehicle 100 is configured in a fully or partially autonomous driving mode. For example, the vehicle 100 may control the vehicle 100 in the autonomous driving mode, determine a current status of the vehicle and an ambient environment of the vehicle through a manual operation, determine possible behavior of at least one another vehicle in the ambient environment, determine a confidence level corresponding to a possibility of performing the possible behavior by the another vehicle, and control the vehicle 100 based on determined information. When the vehicle 100 is in the autonomous driving mode, the vehicle 100 may be configured to operate without interacting with a person.

The vehicle 100 may include various subsystems, for example, a travel system 102, a sensor system 104, a control system 106, one or more peripheral devices 108, a power supply 110, a computer system 101, and a user interface 116. Optionally, the vehicle 100 may include more or fewer subsystems, and each subsystem may include multiple elements, for example, each subsystem includes multiple ECUs. In addition, each subsystem and component of the vehicle 100 may be interconnected in a wired or wireless manner.

The travel system 102 may include an assembly that provides power for the vehicle 100 to move. In an embodiment, a propulsion system 102 may include an engine 118, an energy source 119, a transmission apparatus 120, and wheels/tires 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuels, propane, other compressed gas-based fuels, anhydrous alcohol, solar panels, batteries, and other power sources. The energy source 119 may also provide energy for another system of the vehicle 100.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more of the wheels 121.

The sensor system 104 may include several sensors that can sense information about the ambient environment of the vehicle 100. For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a velocity, and the like) of the object. Such detection and recognition are key functions of a safe operation of the autonomous vehicle 100.

The positioning system 122 may be configured to estimate a geographical position of the vehicle 100. The IMU 124 is configured to sense a position change and an orientation change of the vehicle 100 based on inertial acceleration. In an embodiment, the IMU 124 may be a combination of an accelerometer and a gyroscope.

The radar 126 may sense an object in the ambient environment of the vehicle 100 by using a radio signal. In some embodiments, in addition to sensing an object, the radar 126 may be further configured to sense a velocity and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more processing modules, and another system assembly.

The camera 130 may be configured to capture multiple images of the ambient environment of the vehicle 100. The camera 130 may be a static camera or a video camera.

The control system 106 controls operations of the vehicle 100 and assemblies of the vehicle 100. The control system 106 may include various elements, such as a steering system 132, a throttle 134, a brake unit 136, a computer vision system 140, a route control system 142, and an obstacle avoidance system 144.

The steering system 132 may be operated to adjust a moving direction of the vehicle 100. For example, in an embodiment, the steering system 132 may be a steering wheel system.

The throttle 134 is configured to control an operating velocity of the engine 118 and further control a velocity of the vehicle 100.

The brake unit 136 is configured to control the vehicle 100 to decelerate. The brake unit 136 may use friction to slow down the wheel 121. In another embodiment, the brake unit 136 may convert kinetic energy of the wheel 121 into a current. The brake unit 136 may alternatively use another form to reduce a rotational speed of the wheel 121, to control the velocity of the vehicle 100.

The computer vision system 140 may operate to process and analyze an image captured by the camera 130, to identify an object and/or a feature in the ambient environment of the vehicle 100. The object and/or the feature may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to draw a map for an environment, track an object, estimate a velocity of the object, and the like.

The route control system 142 is configured to determine a travel route of the vehicle 100. In some embodiments, the route control system 142 may determine the travel route for the vehicle 100 with reference to data from the GPS 122, and one or more predetermined maps.

The obstacle avoidance system 144 is configured to recognize, evaluate, and avoid or bypass, in another manner, a potential obstacle in an environment of the vehicle 100.

Certainly, in an instance, the control system 106 may be added with or alternatively include assemblies other than those shown and described. Alternatively, some of the foregoing assemblies may be removed.

The vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may perform an operation through a touchscreen. In another case, the peripheral device 108 may provide a means for the vehicle 100 to communicate with another device located in the vehicle. For example, the microphone 150 may receive an audio (for example, a voice command or another audio input) from the user of the vehicle 100. Similarly, the speaker 152 may output an audio to the user of the vehicle 100.

The wireless communication system 146 may wirelessly communicate with one or more devices directly or through a communication network. For example, the wireless communication system 146 may use 3G cellular communication such as CDMA, EVD0, and GSM/GPRS, or 4G cellular communication such as LTE, or 5G cellular communication. The wireless communication system 146 may communicate with a wireless local area network (wireless local area network, WLAN) through Wi-Fi. In some embodiments, the wireless communication system 146 may directly communicate with a device through an infrared link, Bluetooth, or ZigBee. Other wireless protocols, for example, various vehicle communication systems, such as the wireless communication system 146, may include one or more dedicated short range communications (dedicated short range communications, DSRC) devices, and these devices may include public and/or private data communication between the vehicle and/or a roadside station.

The power supply 110 may provide power for various assemblies of the vehicle 100. In an embodiment, the power supply 110 may be a rechargeable lithium-ion or lead-acid battery. One or more battery packs of such a battery may be configured as a power supply to supply power to the various assemblies of the vehicle 100. In some embodiments, the power supply 110 and the energy source 119 may be implemented together, for example, in some pure electric vehicles.

Some or all functions of the vehicle 100 are controlled by the computer system 101. The computer system 101 may include at least one processor 113. The processor 113 executes instructions 115 stored in a non-transitory computer-readable medium such as a memory 114. The computer system 101 may alternatively be multiple computing devices that control individual assemblies or subsystems of the vehicle 100 in a distributed manner.

The processor 113 may be any conventional processor, for example, a commercially available CPU. Alternatively, the processor may be a dedicated device such as an ASIC or another hardware-based processor. Although FIG. 5 functionally shows the processor, the memory, and other elements of the computer 110 in a same block, a person of ordinary skill in the art should understand that the processor, the computer, or the memory may actually include multiple processors, computers, or memories that may or may not be stored in a same physical housing.

For example, the memory may be a hard disk drive or another storage medium located in a housing different from that of the computer 110. Therefore, a reference to the processor or the computer is understood as including a reference to a set of processors, computers, or memories that may or may not operate in parallel. Different from using a single processor to perform the steps described herein, some assemblies such as a steering assembly and a deceleration assembly may include respective processors. The processor performs only computation related to an assembly-specific function.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the memory 114 may include the instructions 115 (for example, program logic), and the instructions 115 may be executed by the processor to perform various functions of the vehicle 100, including the functions described above. The memory 114 may also include additional instructions, including instructions used to send data to, receive data from, interact with, and/or control one or more of the propulsion system 102, the sensor system 104, the control system 106, and the peripheral device 108.

In addition to the instructions 115, the memory 114 may further store data, for example, a road map, route information, a position, a direction, and a velocity of the vehicle and other such vehicle data, as well as other information. Such information may be used by the vehicle 100 and the computer system 101 when the vehicle 100 operates in an autonomous mode, a semi-autonomous mode, and/or a manual mode.

The user interface 116 is configured to provide information for or receive information from the user of the vehicle 100. Optionally, the user interface 116 may include one or more input/output devices in a set of the peripheral devices 108, for example, the wireless communication system 146, the vehicle-mounted computer 148, the microphone 150, and the speaker 152.

The computer system 101 may control functions of the vehicle 100 based on inputs received from various subsystems (for example, the travel system 102, the sensor system 104, and the control system 106) and from the user interface 116. For example, the computer system 101 may use an input from the control system 106 to control a steering unit 132 to avoid an obstacle detected by the sensor system 104 and the obstacle avoidance system 144. In some embodiments, the computer system 101 may operate to provide control on the vehicle 100 and the subsystems of the vehicle 100 in many aspects.

Optionally, one or more of the foregoing assemblies may be installed separately from or associated with the vehicle 100. For example, the memory 114 may be partially or completely separated from the vehicle 100. The foregoing assemblies may be communicatively coupled together in a wired and/or wireless manner.

Optionally, the foregoing assemblies are only examples. In an actual application, an assembly in each of the foregoing modules may be added or deleted according to an actual requirement. FIG. 5 should not be understood as any limitation on embodiments of this application.

A self-driving car traveling on a road, for example, the foregoing vehicle 100, may recognize an object in an ambient environment of the vehicle, to determine whether to adjust a current velocity. The object may be another vehicle, a traffic control device, or another type of object. In some examples, each recognized object may be independently considered, and a velocity to which the self-driving car needs to be adjusted may be determined based on a feature of the object, for example, a current velocity or an acceleration of the object, or a distance between the object and the vehicle.

Optionally, the autonomous driving vehicle 100 or a computing device associated with the autonomous driving vehicle 100 (for example, the computer system 101, the computer vision system 140, or the memory 114 in FIG. 1) may predict behavior of the identified object based on a feature of the identified object and a state of the surrounding environment (for example, traffic, rain, and ice on a road). Optionally, all recognized objects depend on behaviors of each other, and therefore all the recognized objects may be considered together to predict behavior of a single recognized object. The vehicle 100 can adjust the velocity of the vehicle 100 based on the predicted behavior of the recognized object.

In other words, the self-driving car can determine, based on the predicted behavior of the object, a stable status to which the vehicle needs to be adjusted (for example, an adjustment operation may include acceleration, deceleration, or stop). In this process, another factor may also be considered to determine the velocity of the vehicle 100, for example, a lateral position of the vehicle 100 on a road on which the vehicle 100 travels, a curvature of the road, and proximity between a static object and a dynamic object.

In addition to providing an instruction for adjusting the velocity of the self-driving car, the computing device may further provide an instruction for modifying a steering angle of the vehicle 100, so that the self-driving car follows a given trajectory and/or maintains a safe lateral distance and a safe longitudinal distance from an object (for example, a car in an adjacent lane of the road) near the self-driving car.

The vehicle 100 may be a car, a truck, a motorcycle, a bus, an entertainment vehicle, a playground vehicle, a construction device, a tram, a golf cart, a train, and the like. This is not specifically limited in embodiments of this application.

In the vehicle 100 shown in FIG. 5, an advanced driver assistance system used to implement an autonomous driving function may be configured. The advanced driver assistance system includes a large quantity of parameters that need to be calibrated. Specifically, a calibration implementation process of the advanced driver assistant system of the vehicle mainly includes calibration of parameters of subsystems at an execution layer, a sensing layer, and a functional layer. The execution layer involves power system calibration, braking system calibration, steering system calibration, four-wheel positioning parameters and suspension system calibration. The sensing layer involves GNSS and INS (Initial Navigation System, Inertial Navigation System) calibration, camera calibration, lidar calibration, millimeter-wave radar calibration, ultrasonic radar calibration, and the like. The GNSS includes a GPS (Global Position System, Global Position System), a GLONASS (Global Navigation Satellite System, Global Navigation Satellite System), a Galileo (Galileo navigation satellite system, Galileo navigation satellite system), and a BDS (BeiDou navigation satellite system, BeiDou navigation satellite system). The functional layer involves longitudinal control module calibration, horizontal control module calibration, ADAS basic function calibration, and ADAS driving style calibration. Longitudinal control is mainly velocity control, and the velocity control is realized by controlling a brake, a throttle, and a gear. Horizontal control is mainly used to control a course, and change torque or an angle of the steering wheel to enable the vehicle to travel according to a desired course. The ADAS basic functions include, for example, ACC (Adaptive Cruising System, Adaptive Cruise Control), LCC (Lane Centering Control, Lane Centering Control), and ALC (Auto Lane Change, Auto Lane Change). A driving style means a driving manner or a habitual driving method, and includes selection of a driving velocity, selection of a driving spacing, and the like. The driving style includes, for example, a radical type, a stable type, and a cautious type.

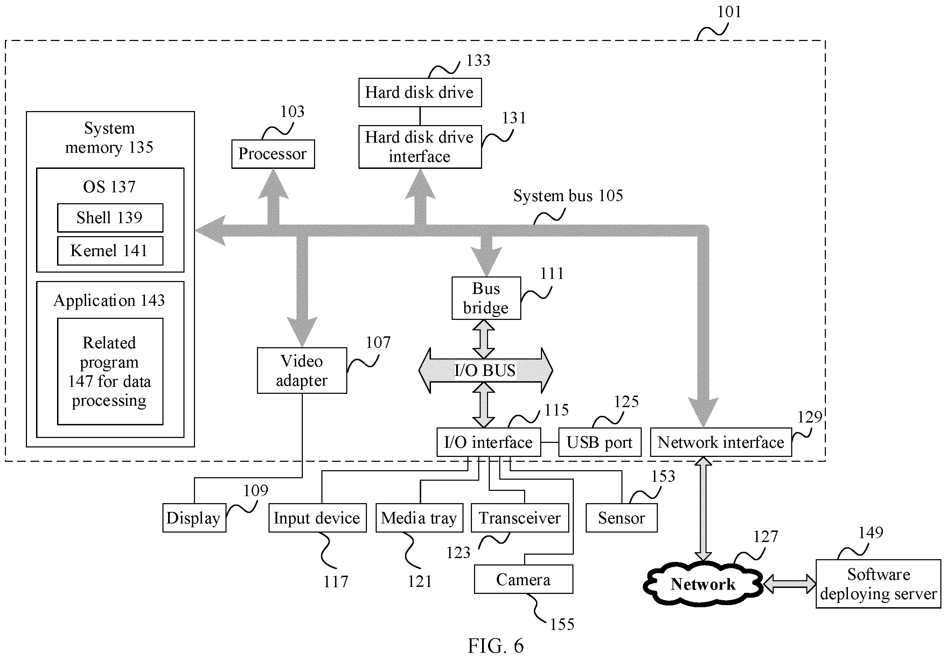

FIG. 6 is a diagram of a structure of a computer system 101 in a vehicle according to an embodiment of this application. The computer system 101 includes a processor 103, and the processor 103 is coupled to a system bus 105. The processor 103 may be configured to implement a function of the processor in FIG. 2. The processor 103 may be one or more processors, and each processor may include one or more processor cores. A video adapter (video adapter) 107 is further included, and the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with multiple I/O devices, for example, an input device 117 (for example, a keyboard, a mouse, and a touchscreen) and a media tray (media tray) 121 (for example, a CD-ROM and a multimedia interface). A transceiver 123 (which may send and/or receive a radio communication signal), a camera 155 (which may capture a dynamic digital video image), and an external USB port 125 are provided. Optionally, an interface connected to the I/O interface 115 may be a USB port.

The processor 103 may be any conventional processor, including a reduced instruction set computing ("RISC") processor, a complex instruction set computing ("CISC") processor, or a combination thereof. Optionally, the processor may be a dedicated apparatus, for example, an application-specific integrated circuit ("ASIC"). Optionally, the processor 103 may be a neural network processing unit or a combination of a neural network processing unit and the foregoing conventional processor.

Optionally, in various embodiments described in this application, the computer system 101 may be located away from an autonomous driving vehicle, and may wirelessly communicate with the autonomous driving vehicle. In another aspect, some of processes described herein are performed on a processor disposed in the autonomous driving vehicle, and others are performed by a remote processor, including taking an action required to perform a single manipulation.

The computer system 101 may communicate with a software deploying server 149 through a network interface 129. The network interface 129 is a hardware network interface, such as a network adapter. A network 127 may be an external network, such as the Internet; or may be an internal network, such as the Ethernet or a virtual private network (VPN). Optionally, the network 127 may be alternatively a wireless network, for example, a Wi-Fi network or a cellular network.

A hard disk drive interface is coupled to the system bus 105. The hardware drive interface is connected to a hard disk drive. A system memory 135 is coupled to the system bus 105. Data running in the system memory 135 may include an operating system 137 and an application 143 of the computer 101.

The operating system includes a shell 139 and a kernel (kernel) 141. The shell 139 is an interface between a user and the kernel (kernel) of the operating system. The shell is an outermost layer of the operating system. The shell manages interaction between the user and the operating system: waiting for an input of the user, interpreting the input of the user for the operating system, and processing various outputs of the operating system.

The kernel 141 includes those parts of the operating system that are used for managing memories, files, peripherals, and system resources. When directly interacting with hardware, the kernel of the operating system usually runs a process, provides inter-process communication, and provides functions such as CPU time slice management, interrupt, memory management, and I/O management.

The application 143 includes a related program 147 for steering wheel hands-off detection and a related program for controlling autonomous driving of a vehicle. The related program 147 for steering wheel hands-off detection is used to process a capacitance signal transmitted by a processing module in the steering wheel detection system. The computer system 101 may implement the steering wheel hands-off detection function in FIG. 4 by executing the related program 147 for steering wheel hands-off detection, that is, detect whether the steering wheel is in a hands-off state.

The related program for controlling autonomous driving of a vehicle may include, for example, a program for managing interaction between the self-driving car and an obstacle on a road, a program for controlling a route or a velocity of the self-driving car, or a program for controlling interaction between the self-driving car and another self-driving car on the road. The application 143 also exists in a system of the deploying server 149.

A sensor 153 is associated with the computer system 101. The sensor 153 is configured to detect an ambient environment of the computer system 101. For example, the sensor 153 can detect animals, vehicles, obstacles, pedestrian crosswalks, and the like. Further, the sensor can detect ambient environments of the animals, the vehicles, the obstacles, or the pedestrian crosswalks. For example, the sensor can detect the ambient environment of animals such as other animals in the ambient environment, a weather condition, and brightness of the ambient environment.

The foregoing describes a scenario and a vehicle to which the steering wheel hands-off detection system provided in embodiments of this application is applied. The following describes in detail the steering wheel hands-off detection system provided in this application.

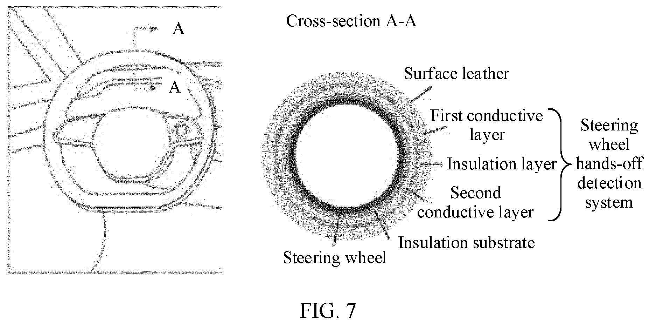

FIG. 7 is a diagram of a structure of a steering wheel hands-off detection system according to an embodiment of this application. As shown in FIG. 7, the outside of a steering wheel is sequentially wrapped with a surface leather, a first conductive layer, an insulation layer, a second conductive layer, and an insulation substrate from outside to inside. The first conductive layer, the insulation layer, and the second conductive layer form the steering wheel hands-off detection system. In addition, the steering wheel hands-off detection system further includes a processing module, and the processing module is not shown in FIG. 7.

In the steering wheel hands-off detection system, the insulation layer is disposed between the first conductive layer and the second conductive layer, and a distance between the first conductive layer and a surface of the steering wheel is different from a distance between the second conductive layer and the surface of the steering wheel. For example, in FIG. 7, the first conductive layer is disposed at an outer layer of the steering wheel, and the second conductive layer is disposed at an inner layer of the steering wheel. Therefore, the distance between the first conductive layer and the surface of the steering wheel is less than the distance between the second conductive layer and the surface of the steering wheel. It should be noted that FIG. 7 is described by using an example in which the first conductive layer is disposed at the outer layer of the steering wheel and the second conductive layer is disposed at the inner layer of the steering wheel. In some embodiments, the first conductive layer may also be disposed at the inner layer of the steering wheel, and the second conductive layer is disposed at the outer layer of the steering wheel. Therefore, the distance between the first conductive layer and the surface of the steering wheel is greater than the distance between the second conductive layer and the surface of the steering wheel. This is not specifically limited in this embodiment.

In addition, the processing module in the steering wheel hands-off detection system may be deployed on the steering wheel, or may be deployed in a control system of a vehicle (for example, the central control system of the vehicle or the computer system 101 shown in FIG. 5). This embodiment does not limit a position at which the processing module in the steering wheel hands-off detection system is deployed.

In a working process of the steering wheel hands-off detection system, the processing module is configured to: identify a holding status of the steering wheel based on a ratio of a first capacitance value to a second capacitance value, and further determine, based on the holding status of the steering wheel, whether the steering wheel is in a hands-off state. The first capacitance value is a capacitance value of the first conductive layer, and the second capacitance value is a capacitance value of the second conductive layer.

Specifically, when the steering wheel is directly held by a hand, the hand has greater impact on a capacitance value of a conductive layer closer to the hand, and has smaller impact on a capacitance value of a conductive layer closer to the hand. Therefore, a capacitance ratio of the two conductive layers is also large. When a user wears a glove on the hand and holds the steering wheel, the hand has not-large impact on capacitance values of the two conductive layers. Therefore a capacitance ratio of the two conductive layers is close to each other. Therefore, two states of holding the steering wheel without a glove and holding the steering wheel with a glove can be effectively identified based on the ratio of the capacitance values of the two conductive layers, and whether the steering wheel is hands-off is further determined based on the identified holding status of the steering wheel. This ensures that steering wheel hands-off detection can be implemented when the steering wheel is held without a glove and when the steering wheel is held with a glove.

In a possible implementation, the processing module may first obtain the first capacitance value of the first conductive layer and the second capacitance value of the second conductive layer, select, based on a ratio of the two capacitance values, a first threshold for identifying whether the steering wheel is in a hands-off state, and then determine whether the steering wheel is in a hands-off state by comparing the first threshold with the capacitance value of the conductive layer.

Specifically, when the first capacitance value or the second capacitance value is greater than or equal to the first threshold, the processing module may determine that the steering wheel is not in a hands-off state; or when the first capacitance value or the second capacitance value is less than the first threshold, the processing module may determine that the steering wheel is in a hands-off state.

It should be noted that, because the first capacitance value and the second capacitance value are capacitance values of different conductive layers, and the two capacitance values are different capacitance values in any state of holding the steering wheel, an actual value of the first threshold is also related to the first capacitance value or the second capacitance value compared with the first threshold. For example, when the first conductive layer is the outer conductive layer of the steering wheel and the second conductive layer is the inner conductive layer of the steering wheel, the first capacitance value of the first conductive layer is always greater than the second capacitance value of the second conductive layer. Therefore, based on a same ratio, if the first threshold is compared with the first capacitance value to determine that the steering wheel is in a hands-off state, the value of the first threshold may be a larger value; or if the first threshold is compared with the second capacitance value to determine that the steering wheel is in a hands-off state, the value of the first threshold may be a smaller value.

In another possible implementation, the processing module may determine a coefficient based on the ratio of the first capacitance value of the first conductive layer to the second capacitance value of the second conductive layer. Then, the processing module multiplies the coefficient by the capacitance value (for example, the first capacitance value or the second capacitance value) of the conductive layer, and compares a multiplication result with a preset threshold, to determine whether the steering wheel is in a hands-off state. If the multiplication result is greater than or equal to the preset threshold, the processing module may determine that the steering wheel is not in a hands-off state; or if the multiplication result is less than the preset threshold, the processing module may determine that the steering wheel is in a hands-off state.

For example, when the distance between the first conductive layer and the surface of the steering wheel is less than the distance between the second conductive layer and the surface of the steering wheel, the first capacitance value is a capacitance value of the outer conductive layer, the second capacitance value is a capacitance value of the inner conductive layer, and the ratio of the first capacitance value to the second capacitance value is negatively correlated with the coefficient.

That is, a larger ratio of the first capacitance value of the first conductive layer to the second capacitance value of the second conductive layer indicates greater impact of a hand of the driver on the capacitance value of the first conductive layer (that is, the driver does not wear a glove), and the first capacitance value is also larger. Therefore, the coefficient may be set to a smaller value, to distinguish between correctly holding the steering wheel by the driver without a glove and touching the steering wheel by a single finger of the driver without a glove. A smaller ratio of the first capacitance value of the first conductive layer to the second capacitance value of the second conductive layer indicates smaller impact of a hand of the driver on the capacitance value of the first conductive layer (that is, the driver wears a glove), and the first capacitance value is also smaller. Therefore, the coefficient may be set to a larger value, so that a result of multiplying the first capacitance value by the coefficient can be greater than or equal to the preset threshold. For another example, when the distance between the first conductive layer and the surface of the steering wheel is greater than the distance between the second conductive layer and the surface of the steering wheel, the first capacitance value is a capacitance value of the inner conductive layer, the second capacitance value is a capacitance value of the outer conductive layer, and the ratio of the first capacitance value to the second capacitance value is positively correlated with the coefficient.

For ease of understanding, the following describes in detail a working principle of the steering wheel hands-off detection system provided in this embodiment of this application.

In the steering wheel hands-off detection system, electric fields are generated after the first conductive layer and the second conductive layer are powered on. An electric field generated by the first conductive layer is affected by the touch of the hand and the second conductive layer, and an electric field generated by the second conductive layer is also affected by the touch of the hand and the first conductive layer.

When the driver holds the steering wheel without a glove, an electric field distribution change caused when a hand of the driver touches the surface of the steering wheel is far greater than an electric field distribution change caused by mutual impact between two conductive layers. That is, a variation of a capacitance value corresponding to each of the first conductive layer and the second conductive layer is mainly affected by the hand of the driver. In addition, because the distance between the hand of the driver and the outer conductive layer is less than the distance between the hand of the driver and the inner conductive layer, the hand of the driver has greater impact on the variation of the capacitance value of the outer conductive layer. In other words, when the driver holds the steering wheel without a glove, a capacitance value of an outer conductive layer is far greater than a capacitance value of an inner conductive layer.

When the driver holds the steering wheel with a glove, the electric field distribution change caused by the driver wearing a glove and touching the steering wheel surface decreases greatly due to the influence of the thick insulation glove. In addition, because the driver holds the steering wheel, the insulation layer between the first conductive layer and the second conductive layer is subject to pressure, causing compression deformation, and consequently, the capacitance value of the first conductive layer and the second conductive layer changes because the distance between the first conductive layer and the second conductive layer is shortened. In this case, an electric field distribution change caused when the driver wears a glove and touches the surface of the steering wheel is less than an electric field distribution change caused by mutual impact between two conductive layers, that is, a variation of a capacitance value corresponding to each of the first conductive layer and the second conductive layer is mainly affected by each other. In other words, when the driver wears a glove and holds the steering wheel, a capacitance value of the outer conductive layer is close to a capacitance value of the inner conductive layer.

In addition, when the driver does not wear a glove and puts a few fingers on the steering wheel, because of the conductive finger, an electric field distribution change caused when the finger of the driver touches the surface of the steering wheel is greater than an electric field distribution change caused by mutual impact between two conductive layers. That is, a variation of a capacitance value corresponding to each of the first conductive layer and the second conductive layer is also mainly affected by the finger of the driver. In addition, because the distance between the hand of the driver and the outer conductive layer is less than the distance between the hand of the driver and the inner conductive layer, the hand of the driver has greater impact on the variation of the capacitance value of the outer conductive layer. In other words, when the driver holds the steering wheel without a glove, the capacitance value of the outer conductive layer is also far greater than the capacitance value of the inner conductive layer.

It can be learned from the foregoing analysis that, by calculating the ratio of the first capacitance value of the first conductive layer to the second capacitance value of the second conductive layer, whether the driver wears a glove can be identified based on the ratio. In addition, for the conductive layer, because the variation of the capacitance value is related to a distance between the conductive layer and a conductive object, whether the driver wears a glove is identified based on a ratio of capacitance values, which can comply with the capacitance value variation property of the conductive layer. This improves identification accuracy.

When it is identified, by using the ratio of the capacitance values of the two conductive layers, whether the driver wears a glove, a threshold used to detect whether the steering wheel is in a hands-off state may be determined based on the ratio. For any conductive layer, a capacitance value of the conductive layer when the driver does not wear a glove is greater than a capacitance value when the driver wears a glove. Therefore, when it is identified that the driver does not wear a glove, a large threshold may be determined to detect whether the steering wheel is in a hands-off state; or when it is identified that the driver wears a glove, a small threshold may be determined to detect whether the steering wheel is in a hands-off state.

In other words, when the distance between the first conductive layer and the surface of the steering wheel is less than the distance between the second conductive layer and the surface of the steering wheel, the first capacitance value is a capacitance value of the outer conductive layer, the second capacitance value is a capacitance value of the inner conductive layer, and the ratio of the first capacitance value to the second capacitance value is positively correlated with the first threshold. That is, a larger ratio of the first capacitance value of the first conductive layer to the second capacitance value of the second conductive layer indicates greater impact of a hand of the driver on the capacitance value of the first conductive layer (that is, the driver does not wear a glove). Therefore, the first threshold may be set to a larger value. A smaller ratio of the first capacitance value of the first conductive layer to the second capacitance value of the second conductive layer indicates smaller impact of the hand of the driver on the capacitance value of the first conductive layer (that is, the driver wears a glove). Therefore, the first threshold may also be set to a smaller value.

Similarly, when the distance between the first conductive layer and the surface of the steering wheel is greater than the distance between the second conductive layer and the surface of the steering wheel, the first capacitance value is a capacitance value of the inner conductive layer, the second capacitance value is a capacitance value of the outer conductive layer, and the ratio of the first capacitance value to the second capacitance value is negatively correlated with the first threshold.

Optionally, to ensure that both the first conductive layer and the second conductive layer can output not-low capacitance values when the driver wears a glove to correctly hold the steering wheel, the first conductive layer and the second conductive layer are flexible conductive layers, and the insulation layer is a compressible and deformable elastic insulation layer. In this way, when the driver wears a glove and correctly holds the steering wheel with multiple fingers, the first conductive layer, the second conductive layer, and the insulation layer can generate compression deformation, so that the first conductive layer and the second conductive layer each output a not-low capacitance value. This improves accuracy of capacitance value detection and ensures accuracy of identifying a final steering wheel hands-off state.

It should be noted that, when the first conductive layer and the second conductive layer are not flexible conductive layers, and the insulation layer is not an elastic insulation layer, the first conductive layer and the second conductive layer in this embodiment can also output close capacitance values, to ensure that detection on the steering wheel hands-off state is implemented in different cases.

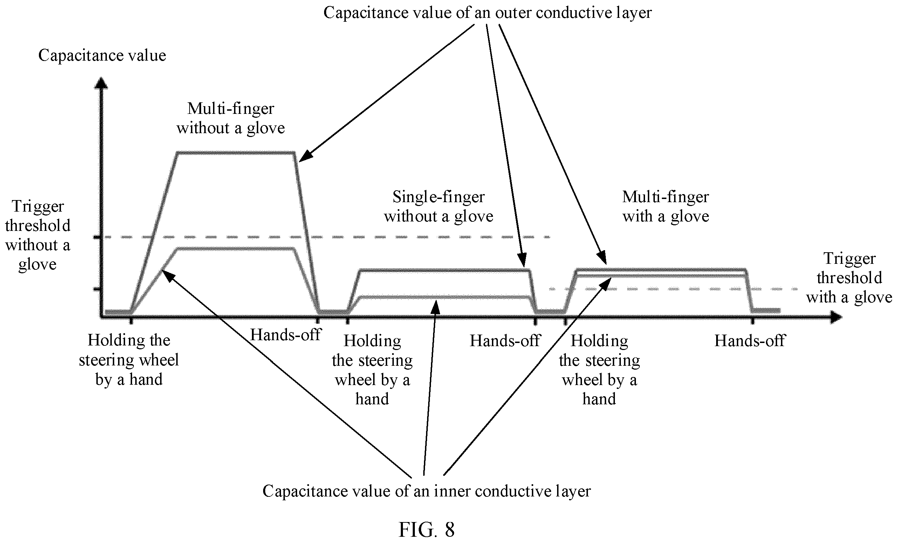

For example, FIG. 8 is a diagram of comparison between capacitance values of a steering wheel detection system in different holding states according to an embodiment of this application. As shown in FIG. 8, based on the steering wheel detection system provided in this embodiment of this application, when a driver does not wear a glove and holds a steering wheel in a correct holding posture with multiple fingers, an outer conductive layer on the steering wheel can output a high capacitance value, and an inner conductive layer on the steering wheel can also output a not-low capacitance value. In addition, because impact of the fingers on the outer conductive layer on the steering wheel is greater than impact of the fingers on the inner conductive layer, the capacitance value output by the outer conductive layer on the steering wheel is far greater than the capacitance value output by the inner conductive layer. In this case, a large trigger threshold (that is, the foregoing first threshold) may be determined based on a ratio of the capacitance value output by the outer conductive layer to the capacitance value output by the inner conductive layer. In addition, in this case, because the capacitance value output by the outer conductive layer is greater than the trigger threshold. Therefore, it can be determined that the driver holds the steering wheel, that is, the steering wheel is not in a hands-off state.

When the driver does not wear a glove and puts a single finger on the steering wheel, the outer conductive layer on the steering wheel outputs a not-high capacitance value, and the inner conductive layer on the steering wheel outputs a low capacitance value. In addition, because impact of the finger on the outer conductive layer on the steering wheel is greater than impact of the finger on the inner conductive layer, the capacitance value output by the outer conductive layer on the steering wheel is several times the capacitance value output by the inner conductive layer. That is, a ratio of the capacitance value output by the outer conductive layer to the capacitance value output by the inner conductive layer is also a larger value. In this way, a larger trigger threshold (that is, the foregoing first threshold) may be determined based on the ratio of the capacitance value output by the outer conductive layer to the capacitance value output by the inner conductive layer. In addition, when the single finger is put on the steering wheel, because the capacitance value output by the outer conductive layer is less than the trigger threshold, it can be determined that the driver does not hold the steering wheel, that is, the steering wheel is in a hands-off state.

When the driver wears a glove and holds the steering wheel in a correct holding posture with multiple fingers, each of the outer conductive layer and the inner conductive layer on the steering wheel outputs a not-high capacitance value. In addition, because impact of the finger on the outer conductive layer on the steering wheel is close to impact of the inner conductive layer, a capacitance value output by the outer conductive layer on the steering wheel is also close to a capacitance value output by the inner conductive layer, that is, a ratio of the capacitance value output by the outer conductive layer to the capacitance value output by the inner conductive layer is small. In this case, a small trigger threshold may be determined based on the ratio of the capacitance value output by the outer conductive layer to the capacitance value output by the inner conductive layer. In this way, when the trigger threshold is small, the capacitance value output by the outer conductive layer is greater than the trigger threshold. Therefore, it can be determined that the driver holds the steering wheel, that is, the steering wheel is not in a hands-off state.

In conclusion, the steering wheel detection system provided in this embodiment can effectively identify, based on the ratio of the capacitance values of the two conductive layers, two states of holding the steering wheel without a glove and holding the steering wheel with a glove, select a corresponding threshold based on the identified holding status of the steering wheel and determine, based on the capacitance value of the conductive layer, whether the steering wheel is hands-off. This ensures that steering wheel hands-off detection can be implemented when the steering wheel is held without a glove and when the steering wheel is held with a glove.

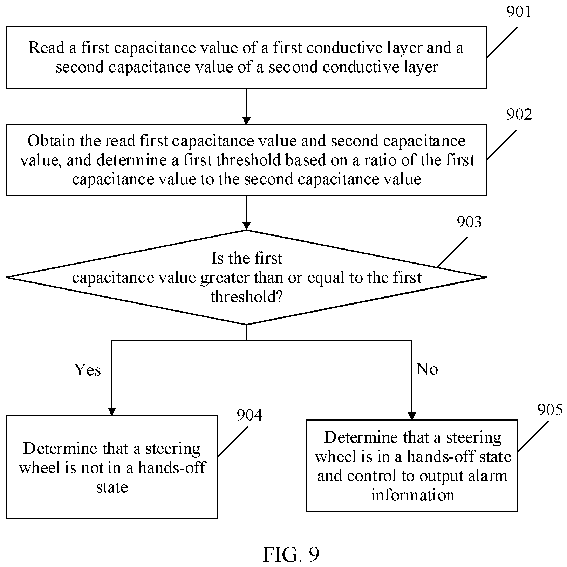

For ease of understanding, the following describes a working procedure of a steering wheel hands-off detection system with reference to a flowchart. FIG. 9 is a diagram of a working procedure of a steering wheel hands-off detection system according to an embodiment of this application. As shown in FIG. 9, the working procedure of the steering wheel hands-off detection system includes the following step 901 to step 905.

Step 901: A capacitance reading module reads a first capacitance value of a first conductive layer and a second capacitance value of a second conductive layer.

In this embodiment, the capacitance reading module is specifically configured to read capacitance values of the first conductive layer and the second conductive layer in the steering wheel hands-off detection system. In addition, in a driving process of a vehicle, the capacitance reading module may read the first capacitance value of the first conductive layer and the second capacitance value of the second conductive layer in real time, to identify in real time whether the steering wheel is in a hands-off state. In addition, the capacitance reading module may also start to work in a specific driving mode. For example, when the vehicle enters an autonomous driving mode, the capacitance reading module starts to work, to identify in real time whether the steering wheel is in a hands-off state in the autonomous driving mode.

Specifically, for an implementation of the capacitance reading module, refer to an existing capacitance value reading structure. This is not specifically limited in this embodiment. The capacitance reading module may be deployed on the steering wheel as a part of a steering wheel detection system. The capacitance reading module may also be integrated into a processing module in the steering wheel detection system. A manner of setting the capacitance reading module is not specifically limited in this embodiment.

Step 902: The processing module obtains the first capacitance value and the second capacitance value that are read by the capacitance reading module, and determines a first threshold based on a ratio of the first capacitance value to the second capacitance value.

Specifically, there is a mapping relationship between a ratio of the first capacitance value to the second capacitance value and the first threshold, and different first thresholds may be determined based on different ratios. For a manner of determining the first threshold based on the ratio of the first capacitance value to the second capacitance value, refer to the description in the foregoing embodiment. Details are not described herein again.

Step 903: The processing module determines whether the first capacitance value is greater than or equal to the first threshold.

It should be noted that, in an actual application, the processing module may also implement steering wheel hands-off detection by comparing the first threshold with the second capacitance value. This is not specifically limited herein.

Step 904: If the first capacitance value is greater than or equal to the first threshold, the processing module determines that the steering wheel is not in a hands-off state.

Step 905: If the first capacitance value is less than the first threshold, the processing module determines that the steering wheel is in a hands-off state, and controls to output alarm information, where the alarm information indicates that the steering wheel is in a hands-off state.

For example, the alarm information output controlled by the processing module may be text information, image information, or speech information. For example, the processing module outputs text information through a central control display or a dashboard of the vehicle, and the text information is specifically "Please hold the steering wheel tightly; otherwise, the vehicle will exit autonomous driving within 5 seconds". For another example, the processing module outputs an image through a central control display or a dashboard of a vehicle. The image may be specifically a simple icon for holding the steering wheel with two hands, to prompt the driver to hold the steering wheel tightly. For another example, the processing module outputs speech information by using a speaker on the vehicle. The speech information may also be "Please hold the steering wheel tightly. Otherwise, the vehicle will exit autonomous driving within 5 seconds", to remind the driver to hold the steering wheel tightly in time.

When the processing module detects that the first capacitance value is less than the first threshold, the processing module continuously controls to output the alarm information. In addition, the processing module continuously performs the foregoing step 901 to step 903, to determine whether the steering wheel is in a hands-off state at each moment. When the processing module determines that the steering wheel is still in a hands-off state, the processing module continues to control to output the alarm information; or when the processing module determines that the steering wheel is not in a hands-off state, the processing module controls not to output the alarm information.

In other words, after the processing module detects that the steering wheel is in a hands-off state, the processing module controls continuous outputs of the alarm information until the steering wheel is no longer in a hands-off state.

The foregoing describes a process of implementing steering wheel hands-off detection based on the first conductive layer and the second conductive layer in the steering wheel hands-off detection system. The following describes some possible designs of the first conductive layer and the second conductive layer in the steering wheel hands-off detection system.

In some embodiments, the first conductive layer includes multiple first parts, and there is a spacing between any two adjacent parts of the multiple first parts. The second conductive layer includes multiple second parts, and there is a spacing between any two adjacent parts of the multiple second parts. For example, the multiple first parts at the first conductive layer are a comb structure, that is, the multiple first parts are parallel to each other, and tops of the multiple first parts are connected together in a long-strip structure. That is, the multiple first parts may be considered as multiple tooth-shaped structures in the comb structure. The multiple second parts at the second conductive layer are also a comb structure, that is, the multiple second parts are parallel to each other, and tops of the multiple second parts are connected together in a long-strip structure. That is, the multiple second parts may also be considered as multiple tooth-shaped structures in the comb structure.

In addition, the multiple first parts and the multiple second parts are mutually staggered. Specifically, because distances from the first conductive layer and the second conductive layer to a surface of the steering wheel are different, it may be considered that the first conductive layer and the second conductive layer are located in different planes along a direction from the surface of the steering wheel to the inside of the steering wheel. In addition, along a direction from the surface of the steering wheel to the inside of the steering wheel, the multiple first parts and the multiple second parts are mutually staggered, that is, the first part and the second part do not overlap.

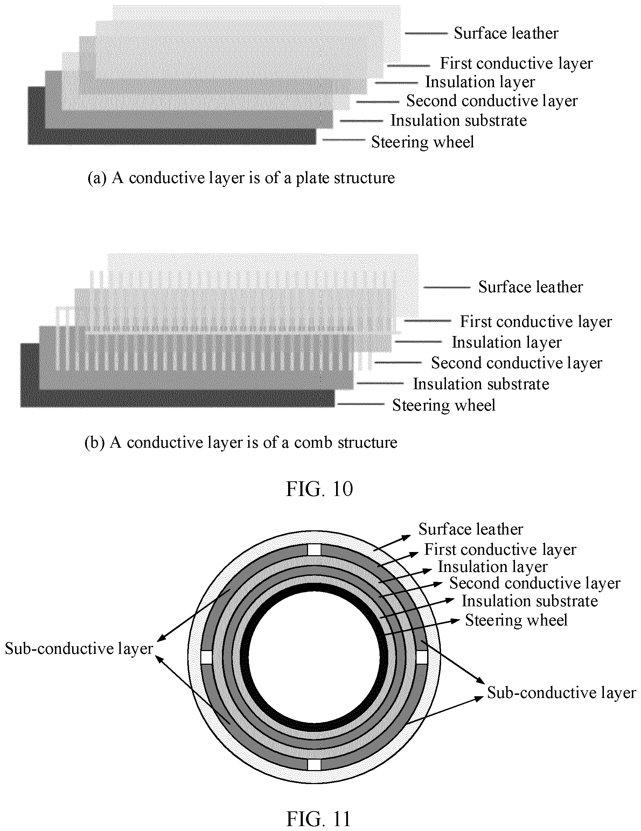

For example, FIG. 10 is a diagram of comparison between structures of a steering wheel detection system according to an embodiment of this application. As shown in (a) in FIG. 10, when the first conductive layer and the second conductive layer each are a plate structure, the first conductive layer and the second conductive layer each may be considered as a long-strip shape that includes a surface of a steering wheel. Along a direction from the surface of the steering wheel to the inside of the steering wheel, the first conductive layer in a plate shape overlaps the second conductive layer in a plate shape in most regions.

As shown in (b) in FIG. 10, when the first conductive layer and the second conductive layer each are a comb structure, the first conductive layer and the second conductive layer each may be considered as a long-strip comb structure used to wrap a surface of a steering wheel. Along a direction from the surface of the steering wheel to the inside of the steering wheel, multiple first parts at the first conductive layer and multiple second parts at the second conductive layer are mutually staggered, so that the first conductive layer does not overlap the second conductive layer in most regions along the direction.

In this way, the first conductive layer and the second conductive layer are disposed as comb structures, and parts between the first conductive layer and the second conductive layer are mutually staggered, so that an overlapping area of the first conductive layer and the second conductive layer in a longitudinal direction can be reduced. This reduces capacitance reading noise of the first conductive layer and the second conductive layer, and improves detection accuracy of the steering wheel hands-off detection system.

Optionally, a length of each of the multiple first parts and the multiple second parts is less than a second threshold, where the length of each part is a length of the part in a rotation direction of the steering wheel. Simply speaking, when each of the multiple first parts and the multiple second parts may be considered as a tooth-shaped structure in the comb structure, the length of each part in the rotation direction of the steering wheel may be considered as a width of the tooth-shaped structure.

For any conductive layer, when a length of multiple parts of the conductive layer in the rotation direction of the steering wheel is larger, the hand of the driver touches fewer parts on the steering wheel; or when a length of multiple parts of the conductive layer in the rotation direction of the steering wheel is smaller, the hand of the driver touches more parts on the steering wheel. In addition, because the multiple first parts and the multiple second parts are mutually staggered, to ensure that a quantity of first parts and a quantity of second parts that are touched when the hand of the driver holds the steering wheel are close, the length of each part may be set to be less than the second threshold, to ensure that touch areas between the two conductive layers and the hand of the driver are as close as possible.

Simply speaking, when the length of each part of the conductive layer is large, because parts of different conductive layers are mutually staggered, quantities of parts of the conductive layers that are touched by the hand of the driver may be different. Consequently, touch areas between the hand of the driver and different conductive layers differ greatly. For example, the hand of the driver touches five first parts at the first conductive layer and four second parts at the second conductive layer. Because a length of each part is large, when there is one part difference, touch areas between the hand of the driver and different conductive layers may differ greatly, which easily affects capacitance values output by the conductive layers.

However, when a length of each part of the conductive layer is set to a small value, even if a quantity of parts of each conductive layer that are touched by the hand of the driver may be different, because the length of each part is set to a small value, actually, touch areas between the hand of the driver and different conductive layers may not differ greatly. For example, the hand of the driver touches 1000 first parts at the first conductive layer and 999 second parts at the second conductive layer. Because a length of each part is small, when there is only one part difference, touch areas between the hand of the driver and different conductive layers are very close, to avoid affecting capacitance values output by the conductive layers.

Specifically, the second threshold may be determined comprehensively based on manufacturing costs and precision requirements. For example, the second threshold is 1 mm, 2 mm, or 5 mm, and a specific value of the second threshold is not limited herein.

The foregoing describes specific structural shapes of the first conductive layer and the second conductive layer, and the following describes materials of the first conductive layer, the second conductive layer, and an insulation layer.

Specifically, the first conductive layer and the second conductive layer may be implemented in multiple manners.

### Implementation 1

The first conductive layer and the second conductive layer each may be a conductive fabric woven by a conductive fiber to serve as a conductive layer; or the first conductive layer and the second conductive layer each may be a conductive layer including a conductive fiber sewn on a surface leather and a surface of an insulation substrate.

The conductive fiber may be made by coating a periphery of a common fiber (for example, a vegetable fiber, a synthetic fiber, or an artificial fiber) with a conductive coating (a metal particle, a carbon nanomaterial, a silver nanowire, or the like). The conductive fiber may also be a fiber that is electrically conductive, for example, a stainless steel fiber or a metal fiber.

### Implementation 2

The first conductive layer and the second conductive layer may be conductive layers formed by printing conductive materials on the surface of the leather and the surface of the insulation substrate. The conductive material includes materials such as conductive ink, conductive resin, and conductive silver paste.

The first conductive layer and the second conductive layer may also be conductive layers formed by printing conductive polymers on the surface of the leather and the surface of the insulation substrate. The conductive polymer material may be made by adding a nano-conductive material such as carbon or silver into a polymer substrate such as silicone, PDMS, or PU.

### Implementation 3

The first conductive layer and the second conductive layer each may use a flexible thin film conductive layer as an electrode. The two electrodes are made of metal materials, such as gold, copper, and aluminum. The insulation layer in the middle may be a polyimide thin film, a PET thin film, or the like.

For the insulation layer between the first conductive layer and the second conductive layer, the insulation layer may be made of a material such as leather, non-conductive fabric, polyimide, PET, or elastic polymer, and includes silicone, PDMS, PU, or the like.

In addition to the foregoing materials, the first conductive layer, the second conductive layer, and the insulation layer may also be made of other conductive materials and insulating materials. This is not limited in this embodiment.

Optionally, in some possible embodiments, the first conductive layer includes multiple sub-conductive layers, the multiple sub-conductive layers are not electrically connected to each other, and the multiple sub-conductive layers are distributed in different regions on the steering wheel along a rotation direction of the steering wheel, where the first capacitance value is a largest capacitance value of multiple capacitance values corresponding to the multiple sub-conductive layers, that is, in a process of steering wheel hands-off detection, a capacitance value corresponding to a sub-conductive layer with the largest capacitance value in the multiple sub-conductive layers may be selected to perform hands-off detection. Simply speaking, as long as the hand of the driver holds any region on the steering wheel, it can be determined, based on the capacitance value of the sub-conductive layer in the region, that the driver correctly holds the steering wheel.

For example, FIG. 11 is a diagram of a structure of a steering wheel detection system according to an embodiment of this application. As shown in FIG. 11, a surface leather, a first conductive layer, an insulation layer, a second conductive layer, an insulation substrate, and a steering wheel are sequentially disposed along a direction from a surface of the steering wheel to the inside of the steering wheel. The first conductive layer includes four sub-conductive layers, and the four sub-conductive layers are separately deployed at different positions (that is, an upper left position, an upper right position, a lower left position, and a lower right position). Because there is no electrical connection between the sub-conductive layers, the sub-conductive layer outputs a corresponding capacitance value only when a position at which a sub-conductive layer is deployed is held by a hand of a driver. Therefore, the position of the steering wheel held by the hand of the driver is determined based on the capacitance value of each sub-conductive layer.

It should be noted that FIG. 11 is described by using an example in which the first conductive layer includes the four sub-conductive layers. In an actual application, a quantity of sub-conductive layers included in the first conductive layer may also be another quantity, for example, 2, 6, 8, or 10. This is not specifically limited in this embodiment.

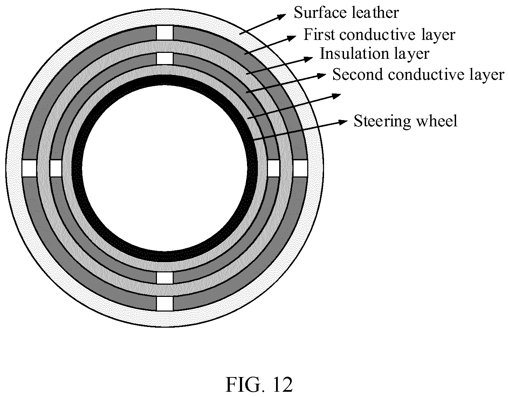

In addition, the first conductive layer may be set to include multiple sub-conductive layers, or the second conductive layer may be set to include multiple sub-conductive layers, that is, multiple sub-conductive layers are set for each of the two sub-conductive layers. For example, FIG. 12 is a diagram of another structure of a steering wheel detection system according to an embodiment of this application. As shown in FIG. 12, a surface leather, a first conductive layer, an insulation layer, a second conductive layer, an insulation substrate, and a steering wheel are sequentially disposed along a direction from a surface of the steering wheel to the inside of the steering wheel. The first conductive layer includes four sub-conductive layers, and the second conductive layer also includes four sub-conductive layers. The sub-conductive layers deployed at the same position in the first conductive layer and the second conductive layer cooperate with each other to implement steering wheel hands-off detection.

In conclusion, in this solution, multiple sub-conductive layers are separately disposed in different regions on the steering wheel, so that a position of the steering wheel held by a hand of a driver can be determined based on a capacitance value of each sub-conductive layer, and some interaction functions can be triggered based on a change of the held position of the steering wheel.

For example, the processing module may be further configured to control to output a first instruction based on that largest values of capacitance values of two adjacent sub-conductive layers within preset time are both greater than or equal to a third threshold. The third threshold may be related to the foregoing first threshold. A larger first threshold indicates a larger third threshold, and a smaller first threshold indicates a smaller third threshold. For example, when the first threshold is used to compare with a first capacitance value of the first conductive layer, the third threshold may be the same as the first threshold. In addition, the preset time may be, for example, 0.5 second or 1 second. This is not specifically limited in embodiments.

It may be understood that, for a sub-conductive layer, the sub-conductive layer outputs a high capacitance value only when the hand of the driver holds the sub-conductive layer; otherwise, the capacitance value output by the sub-conductive layer is very low. Therefore, if the largest values of the capacitance values of the two adjacent sub-conductive layers within the preset time are both greater than or equal to the third threshold, it may be considered that the hand of the driver slides from one sub-conductive layer to another sub-conductive layer within the preset time, that is, the hand of the driver slides on the steering wheel, so that the processing module controls to output the first instruction to implement interaction in a vehicle.

Optionally, the first instruction may include but is not limited to the following instructions: answering an incoming call, declining an incoming call, switching a song, adjusting volume, adjusting an air conditioner temperature, lifting/lowering a window of a vehicle, or adjusting a seat.

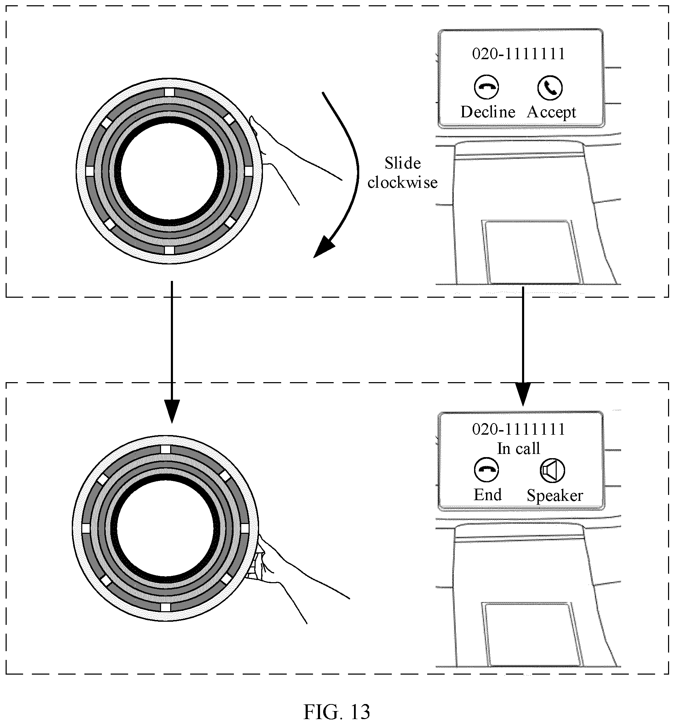

For example, FIG. 13 is a diagram of triggering interaction with a vehicle by sliding a hand holding a steering wheel according to an embodiment of this application. As shown in FIG. 13, on the steering wheel of the vehicle, a first conductive layer of a steering wheel detection system includes eight sub-conductive layers, and the eight sub-conductive layers are separately deployed at different positions around the steering wheel. When the vehicle is connected to a smartphone of the driver, the smartphone of the driver receives an incoming call, and incoming call information is simultaneously displayed on the central control screen of the vehicle, to prompt the driver to process the incoming call. When the incoming call information is displayed on the central control screen of the vehicle, the right hand of the driver holds a second sub-conductive layer on the right side of the steering wheel, that is, the second sub-conductive layer outputs a capacitance value greater than a third threshold. After the right hand of the driver slides clockwise on the steering wheel, the right hand of the driver quickly slides from the second sub-conductive layer on the right side of the steering wheel to a third sub-conductive layer on the right side of the steering wheel. Therefore, the third sub-conductive layer also outputs a capacitance value greater than the third threshold. In this way, a processing module in a steering wheel hands-off detection system detects that capacitance values output by the second sub-conductive layer and the third sub-conductive layer within preset time are greater than the third threshold, and controls to output an instruction for answering a call, to answer the call.

In this solution, multiple sub-conductive layers are deployed at different positions on the steering wheel, so that a position of the steering wheel held by the hand of the driver can be determined based on capacitance values output by the multiple sub-conductive layers, and interaction between the driver and the vehicle is triggered based on a change of the holding position of the hand of the driver. In this way, the driver interacts with the vehicle without taking the hand of the driver off the steering wheel, which ensures driving safety.

Optionally, when one hand of the driver slides on the steering wheel, to prevent the hand of the driver from affecting a normal operation on the steering wheel, the other hand of the driver usually needs to hold only the steering wheel. Therefore, in this embodiment, the processing module may alternatively control to output a first instruction only when detecting that one hand of the driver tightly holds the steering wheel and the other hand of the driver slides on the steering wheel. Specifically, when detecting that a capacitance value output by one sub-conductive layer is always greater than a first threshold, and a largest capacitance value output by the other two sub-conductive layers is greater than or equal to the third threshold within the preset time, the processing module may control to output the first instruction.

The foregoing describes a process in which the processing module in the steering wheel hands-off detection system triggers the output of the first instruction by detecting that the hand of the driver slides on the steering wheel. In some embodiments, the processing module in the steering wheel hands-off detection system may further determine a type of the output instruction triggered by detecting a sliding direction of the hand of the driver on the steering wheel. That is, if the hand of the driver slides in different directions on the steering wheel, instructions output by the processing module are also different.

For example, the processing module is further configured to control to output a first sub-instruction or a second sub-instruction based on positions of a first sub-conductive layer and a second sub-conductive layer, where the first instruction includes the first sub-instruction and the second sub-instruction. The first sub-conductive layer and the second sub-conductive layer are two adjacent sub-conductive layers, and time at which a largest capacitance value of the first sub-conductive layer occurs within the preset time is earlier than time at which a largest capacitance value of the second sub-conductive layer occurs within the preset time. That is, the hand of the driver slides from a position of the first sub-conductive layer to a position of the second conductive layer. Therefore, the first sub-conductive layer first outputs the largest capacitance value, and then the second sub-conductive layer outputs the largest capacitance value.

In this way, if the first sub-conductive layer and the second sub-conductive layer are arranged clockwise on the steering wheel, the processing module may determine that the hand of the driver slides clockwise; or if the first sub-conductive layer and the second sub-conductive layer are arranged counterclockwise on the steering wheel, the processing module may determine that the hand of the driver slides counterclockwise. In other words, the processing module may determine the sliding direction of the hand of the driver based on a position relationship between the first sub-conductive layer and the second sub-conductive layer, to control to output a corresponding instruction. For example, if the processing module determines that the hand of the driver slides clockwise, the processing module controls to output the first sub-instruction, where the first sub-instruction is, for example, answering a call, switching to a next song, turning volume up, increasing an air conditioner temperature, lifting a window of a vehicle, or lifting a seat position; or if the processing module determines that the hand of the driver slides counterclockwise, the processing module controls to output the second sub-instruction, where the second sub-instruction is, for example, declining an incoming call, switching to a previous song, turning volume down, decreasing an air conditioner temperature, lowering a window of a vehicle, or lowering a seat position.

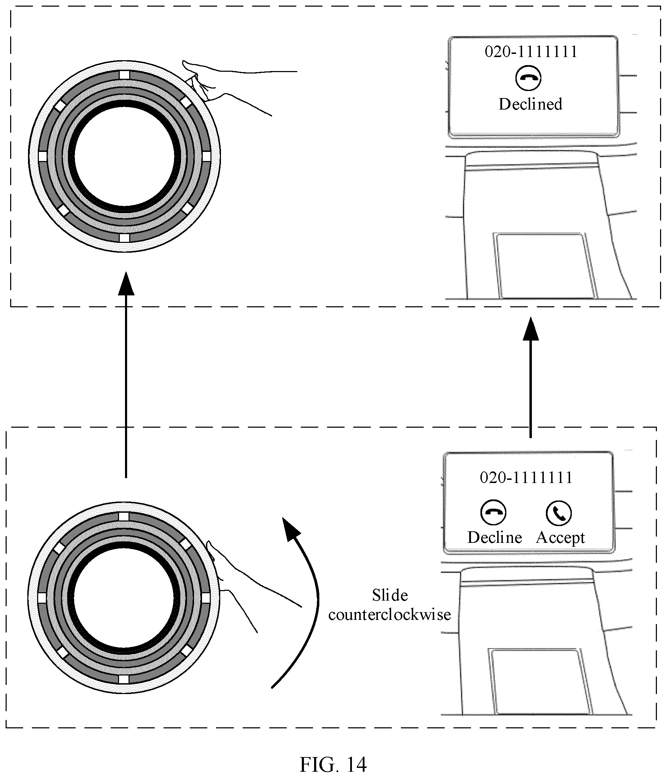

For example, FIG. 13 is a diagram of triggering interaction with a vehicle by sliding a hand holding a steering wheel according to an embodiment of this application. FIG. 14 is another diagram of triggering interaction with a vehicle by sliding a hand holding a steering wheel according to an embodiment of this application. As shown in FIG. 13, when the incoming call information is displayed on the central control screen of the vehicle, and the processing module detects that the hand of the driver slides clockwise, the processing module controls to output an instruction for answering the incoming call, to answer the incoming call.

As shown in FIG. 14, when the incoming call information is displayed on the central control screen of the vehicle, and the processing module detects that the hand of the driver slides counterclockwise (that is, the right hand of the driver quickly slides from the second sub-conductive layer on the right side of the steering wheel to the first sub-conductive layer on the right side of the steering wheel), the processing module controls to output an instruction for declining an incoming call, to decline the incoming call.

In this solution, multiple sub-conductive layers are deployed at different positions on the steering wheel, so that a sliding direction of the hand of the driver on the steering wheel can be obtained based on capacitance values output by the multiple sub-conductive layers, and a corresponding instruction can be triggered to output. This can ensure driving safety, ensure diversified interaction between the driver and the vehicle, and meet diversified user requirements.

The foregoing describes the processing module in the steering wheel hands-off detection system to control to output an instruction by detecting a sliding status of the hand of the driver on the steering wheel, to implement a process of interaction between the driver and the vehicle. In some embodiments, the processing module in the steering wheel hands-off detection system may further detect a strength of holding the steering wheel by the hand of the driver, and determine a status or an intention of the driver, to control to output another instruction. This implements more interaction manners between the driver and the vehicle.

For example, when the processing module determines that the steering wheel is not in a hands-off state, the processing module is further configured to control to output a second instruction based on a magnitude of a holding force on the steering wheel or a change status of a magnitude of a holding force on the steering wheel within a preset time range.

For example, the processing module may control, based on that the holding force on the steering wheel is greater than or equal to a fourth threshold, to control to output the second instruction. The second instruction may be, for example, answering an incoming call, declining an incoming call, switching a song, adjusting volume, adjusting an air conditioner temperature, lifting/lowering a window of a vehicle, or adjusting a seat. The fourth threshold may be a large threshold. When the processing module detects that the holding force on the steering wheel is greater than or equal to the fourth threshold, it may be considered that the driver actively pinches the steering wheel to trigger a pinch function of the steering wheel, to control to output the second instruction.

For another example, the processing module may gradually increase the holding force on the steering wheel within the preset time range, to control to output the second instruction. The preset time range may be, for example, a small time range, for example, 1 second or 2 seconds. The second instruction may be, for example, answering an incoming call, declining an incoming call, switching a song, adjusting volume, adjusting an air conditioner temperature, lifting/lowering a window of a vehicle, or adjusting a seat.

For another example, the processing module may gradually decrease the holding force on the steering wheel within the preset time range, to control to output the second instruction. The preset time range may be, for example, a large time range, for example, one hour, two hours, or four hours. The second instruction is, for example, displaying prompt information "You are tired of driving, please take a rest" on a central control display or a dashboard, or outputting speech information "You are tired of driving, please take a rest". In other words, when the processing module detects that the magnitude of the holding force on the steering wheel gradually decreases within a specific time range, the processing module may consider that the driver has gradually entered a fatigue state, to remind the driver to pay attention to rest, to ensure driving safety.

Specifically, when the driver holds the steering wheel through different strengths, touch areas between the hand of the driver and the steering wheel are different, and distances between the hand of the driver and each of the first conductive layer and the second conductive layer on the steering wheel are also different. A larger strength of holding the steering wheel by the driver indicates a larger touch area between the hand of the driver and the steering wheel, and a smaller distance between the hand of the driver and each of the first conductive layer and the second conductive layer on the steering wheel. Therefore, capacitance values output by the first conductive layer and the second conductive layer are also larger. Similarly, a smaller strength of holding the steering wheel by the driver indicates a smaller touch area between the hand of the driver and the steering wheel, and a larger distance between the hand of the driver and each of the first conductive layer and the second conductive layer on the steering wheel. Therefore, capacitance values output by the first conductive layer and the second conductive layer are also smaller. In other words, capacitance values output by the first conductive layer and the second conductive layer are related to a strength of holding the steering wheel by the driver.

Therefore, when the steering wheel hands-off detection system detects a state of holding the steering wheel by the hand of the driver (that is, the steering wheel is held by wearing a glove or is held by not wearing a glove), the capacitance value of the first conductive layer or the second conductive layer may be converted into the magnitude of the holding force by using a specific mapping coefficient.

For example, when determining that the steering wheel is not in a hands-off state, the processing module is further configured to: determine a mapping coefficient based on a ratio of a first capacitance value to a second capacitance value, and determine the magnitude of the holding force on the steering wheel based on the mapping coefficient and the first capacitance value. The ratio of the first capacitance value to the second capacitance value reflects a status of holding the steering wheel by the hand of the driver, and the status of holding the steering wheel by the hand of the driver determines a mapping relationship between a capacitance value and a magnitude of a holding force. Therefore, the foregoing mapping coefficient is related to the ratio of the first capacitance value to the second capacitance value.

In this solution, the processing module in the steering wheel hands-off detection system determines a status or an intention of the driver by detecting a strength of holding the steering wheel by the hand of the driver, to control to output another instruction. This can implement more interaction manners between the driver and the vehicle.

An embodiment of this application further provides a steering wheel hands-off detection method. The method is applied to a processing module in a steering wheel hands-off detection system. The system includes a first conductive layer, a second conductive layer, an insulation layer, and the processing module. The insulation layer is disposed between the first conductive layer and the second conductive layer, and a distance between the first conductive layer and a surface of a steering wheel is different from a distance between the second conductive layer and the surface of the steering wheel.

The method includes: obtaining a first capacitance value and a second capacitance value, where the first capacitance value is a capacitance value of the first conductive layer, and the second capacitance value is a capacitance value of the second conductive layer; and
determining, based on a ratio of the first capacitance value to the second capacitance value, whether the steering wheel is in a hands-off state.

In a possible implementation, the determining, based on a ratio of the first capacitance value to the second capacitance value, whether the steering wheel is in a hands-off state is specifically:
determining a first threshold based on the ratio of the first capacitance value to the second capacitance value, and determining, by comparing the first capacitance value or the second capacitance value with the first threshold, whether the steering wheel is in a hands-off state, where
when the distance between the first conductive layer and the surface of the steering wheel is less than the distance between the second conductive layer and the surface of the steering wheel, the ratio is positively correlated with the first threshold; or
when the distance between the first conductive layer and the surface of the steering wheel is greater than the distance between the second conductive layer and the surface of the steering wheel, the ratio is negatively correlated with the first threshold.

In a possible implementation, the determining, by comparing the first capacitance value or the second capacitance value with the first threshold, whether the steering wheel is in a hands-off state includes:
when the first capacitance value or the second capacitance value is greater than or equal to the first threshold, determining that the steering wheel is not in a hands-off state; or
when the first capacitance value or the second capacitance value is less than the first threshold, determining that the steering wheel is in a hands-off state.

In a possible implementation, the method further includes:
when it is determined that the steering wheel is in a hands-off state, controlling to output alarm information, where the alarm information indicates that the steering wheel is in a hands-off state.

In a possible implementation, the first conductive layer includes multiple sub-conductive layers, the multiple sub-conductive layers are not electrically connected to each other, the multiple sub-conductive layers are distributed in different regions on the steering wheel along a rotation direction of the steering wheel, and the first capacitance value is a largest capacitance value of multiple capacitance values corresponding to the multiple sub-conductive layers; and
the method further includes:
controlling to output a first instruction based on that largest values of capacitance values of two adjacent sub-conductive layers within preset time are both greater than or equal to a third threshold.

In a possible implementation, the method further includes:
controlling to output a first sub-instruction or a second sub-instruction based on positions of a first sub-conductive layer and a second sub-conductive layer, where the first instruction includes the first sub-instruction and the second sub-instruction; and
the first sub-conductive layer and the second sub-conductive layer are the two adjacent sub-conductive layers, and time at which a largest capacitance value of the first sub-conductive layer occurs within the preset time is earlier than time at which a largest capacitance value of the second sub-conductive layer occurs within the preset time.

In a possible implementation, the first instruction includes: answering an incoming call, declining an incoming call, switching a song, adjusting volume, adjusting an air conditioner temperature, lifting/lowering a window of a vehicle, or adjusting a seat.

In a possible implementation, the method further includes:
when it is determined that the steering wheel is not in a hands-off state, controlling to output a second instruction based on a magnitude of a holding force on the steering wheel or a change status of a magnitude of a holding force on the steering wheel within a preset time range.

In a possible implementation, the method further includes:
determining a mapping coefficient based on the ratio, and determining the magnitude of the holding force on the steering wheel based on the mapping coefficient and the first capacitance value.

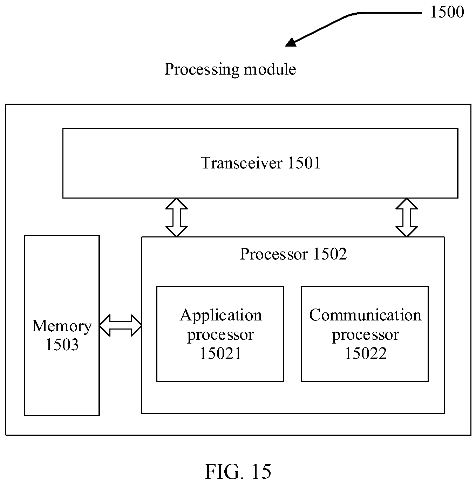

The following describes a processing module according to an embodiment of this application. FIG. 15 is a diagram of a structure of a processing module according to an embodiment of this application. The processing module 1500 may be specifically represented as a microcontroller unit (Microcontroller Unit, MCU), a chip, a chip system, a circuit system, or the like. This is not limited herein. Specifically, the processing module 1500 includes a transceiver 1501, a processor 1502, and a memory 1503 (where there may be one or more processors 1502 in the processing module 1500, and one processor is used as an example in FIG. 15). The processor 1502 may include an application processor 15021 and a communication processor 15022. In some embodiments of this application, the transceiver 1501, the processor 1502, and the memory 1503 may be connected through a bus or in another manner.

The memory 1503 may include a read-only memory and a random access memory, and provides instructions and data to the processor 1502. A part of the memory 1503 may further include a non-volatile random access memory (non-volatile random access memory, NVRAM). The memory 1503 stores a processor and operation instructions, an executable module, or a data structure; or a subset thereof; or an extended set thereof. The operation instructions may include various operation instructions used to implement various operations.

The processor 1502 controls an operation of a steering wheel hands-off detection system. In a specific application, assemblies in the steering wheel hands-off detection system are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1502, or be implemented by using the processor 1502. The processor 1502 may be an integrated circuit chip with a signal processing capability. In an implementation process, steps of the foregoing method may be implemented by using an integrated logical circuit of hardware in the processor 1502 or instructions in a form of software. The processor 1502 may be a general-purpose processor, a digital signal processor (digital signal processing, DSP), a microprocessor, or a microcontroller. The processor 1502 may further include an application-specific integrated circuit (application-specific integrated circuit, ASIC), a field-programmable gate array (field-programmable gate array, FPGA) or another programmable logic device, a discrete gate or transistor logic device, or a discrete hardware assembly. The processor 1502 may implement or perform the method, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1503. The processor 1502 reads information in the memory 1503 and implements the steps of the foregoing method with reference to hardware of the processor 1502.

The transceiver 1501 (for example, a network adapter) may be configured to: receive input digital or character information, and generate a signal input related to a related setting and function control of the processing module. The transceiver 1501 may be further configured to: output digit or character information through a first interface, and send instructions to a disk group through the first interface, to modify data in the disk group.

The processing module provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the processing module performs the model hyperparameter selection method described in embodiments, or a chip in a training device performs the model hyperparameter selection method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

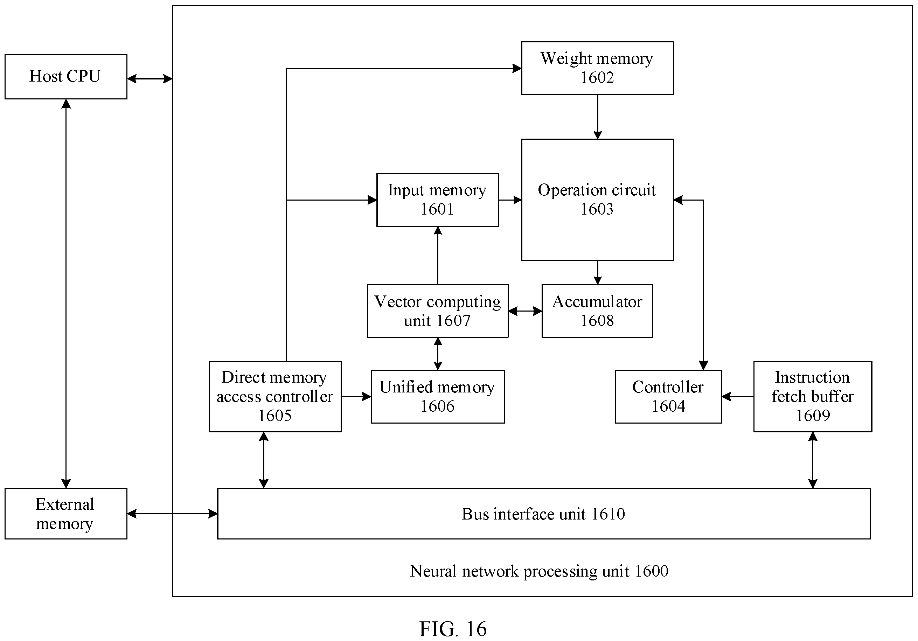

Specifically, FIG. 16 is a diagram of a structure of a chip according to an embodiment of this application. The chip may be represented as a neural network processing unit NPU 1600. The NPU 1600 is mounted to a host CPU (Host CPU) as a coprocessor, and a task is allocated by the host CPU. A core part of the NPU is an operation circuit 1603. The operation circuit 1603 is controlled by a controller 1604 to extract matrix data in a memory and perform a multiplication operation.

In some implementations, the operation circuit 1603 internally includes multiple processing units (Process Engine, PEs). In some implementations, the operation circuit 1603 is a two-dimensional systolic array. The operation circuit 1603 may be alternatively a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602 and buffers the data on each PE in the operation circuit. The operation circuit fetches data of the matrix A from an input memory 1601, to perform a matrix operation with the matrix B to obtain a partial result or a final result of a matrix, and stores the result into an accumulator (accumulator) 1608.

A unified memory 1606 is configured to store input data and output data. Weight data directly passes through a direct memory access controller (Direct Memory Access Controller, DMAC) 1605, and the DMAC is transferred to the weight memory 1602. The input data is also transferred to the unified memory 1606 through the DMAC.

A BIU is a bus interface unit, namely, a bus interface unit 1610, and is configured to perform interaction between an AXI bus, and the DMAC and an instruction fetch buffer (Instruction Fetch Buffer, IFB) 1609.

The bus interface unit 1610 (Bus Interface Unit, BIU) is used by the instruction fetch buffer 1609 to obtain instructions from an external memory, and is further used by the direct memory access controller 1605 to obtain original data of the input matrix A or the weight matrix B from the external memory.

The DMAC is mainly configured to: transfer input data in the external memory DDR to the unified memory 1606, transfer the weight data to the weight memory 1602, or transfer the input data to the input memory 1601.

A vector computing unit 1607 includes multiple operation processing units. If needed, further processing, for example, vector multiplication, vector addition, an exponential operation, a logarithm operation, or size comparison, is performed on an output of the operation circuit 1603. The vector computing unit 1607 is mainly used for non-convolutional/fully connected layer network calculation in a neural network, such as batch normalization (batch normalization), pixel-level summation, and upsampling of a feature map.

In some implementations, the vector computing unit 1607 can store, into the unified memory 1606, a processed output vector. For example, the vector computing unit 1607 may apply a linear function or a nonlinear function to the output of the operation circuit 1603, for example, perform linear interpolation on a feature map extracted from a convolutional layer, and for another example, obtain a vector of an accumulated value to generate an activation value. In some implementations, the vector computing unit 1607 generates a normalized value, a pixel-level sum, or a normalized value and a pixel-level sum. In some implementations, the processed output vector can be used as an activation input to the operation circuit 1603, for example, the processed output vector is used in a subsequent layer in the neural network.

The instruction fetch buffer (instruction fetch buffer) 1609 connected to the controller 1604 is configured to store instructions used by the controller 1604.

The unified memory 1606, the input memory 1601, the weight memory 1602, and the instruction fetch buffer 1609 are all on-chip memories. The external memory is private to a hardware architecture of the NPU.

Any one of the processors mentioned above may be a general-purpose central processing unit, a microprocessor, an ASIC, or one or more integrated circuits for controlling program execution.

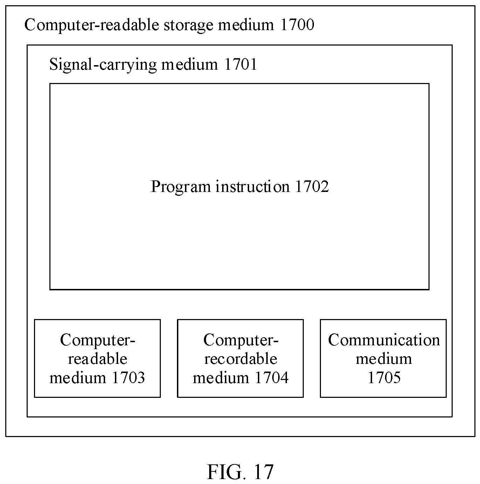

FIG. 17 is a diagram of a structure of a computer-readable storage medium according to an embodiment of this application. This application further provides a computer-readable storage medium. In some embodiments, the foregoing method disclosed may be implemented as computer program instructions encoded in a machine readable format on the computer-readable storage medium or encoded in another non-transitory medium or product.

FIG. 17 schematically shows a conceptual partial view of an example computer-readable storage medium arranged according to at least some embodiments shown herein. The example computer-readable storage medium includes a computer program for executing a computer process on a computing device.

In an embodiment, a computer-readable storage medium 1700 is provided by using a signal-carrying medium 1701. The signal-carrying medium 1701 may include one or more program instructions 1702, and when one or more program instructions 1702 are run by one or more processors, the foregoing functions or some functions described in FIG. 9 may be provided. In addition, the program instruction 1702 in FIG. 17 also describes an example instruction.

In some examples, the signal-carrying medium 1701 may include a computer-readable medium 1703, such as but not limited to a hard disk drive, a compact disc (CD), a digital video disc (DVD), a digital tape, a memory, a ROM, or a RAM.

In some implementations, the signal-carrying medium 1701 may include a computer-recordable medium 1704, for example but not limited to, a memory, a read/write (R/W) CD, or an R/W DVD. In some implementations, the signal-carrying medium 1701 may include a communication medium 1705, for example but not limited to, digital and/or analog communication medium (for example, an optical fiber, a waveguide, a wired communication link, or a wireless communication link). Therefore, for example, the signal-carrying medium 1701 may communicate by the communication medium 1705 in a wireless form (for example, a wireless communication medium that complies with the IEEE 802 standard or another transmission protocol).

The one or more program instructions 1702 may be, for example, one or more computer-executable instructions or logic implementation instructions. In some examples, a computing device may be configured to provide various operations, functions, or actions in response to the program instructions 1702 transmitted to the computing device by using one or more of the computer-readable medium 1703, the computer-recordable medium 1704, and/or the communication medium 1705.

In addition, it should be noted that the described apparatus embodiment is only an example. The units described as separate parts may or may not be physically separate, and parts displayed as units may or may not be physical units, may be located in one position, or may be distributed on multiple network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A steering wheel hands-off detection system, comprising a first conductive layer, a second conductive layer, an insulation layer, and a processing module, wherein
the insulation layer is disposed between the first conductive layer and the second conductive layer, and a distance between the first conductive layer and a surface of a steering wheel is different from a distance between the second conductive layer and the surface of the steering wheel;
the processing module is configured to determine, based on a ratio of a first capacitance value to a second capacitance value, whether the steering wheel is in a hands-off state; and
the first capacitance value is a capacitance value of the first conductive layer, and the second capacitance value is a capacitance value of the second conductive layer.

2. The system according to claim 1, wherein that the processing module is configured to determine, based on a ratio of a first capacitance value to a second capacitance value, whether the steering wheel is in a hands-off state is specifically:
the processing module is configured to: determine a first threshold based on the ratio of the first capacitance value to the second capacitance value, and determine, by comparing the first capacitance value or the second capacitance value with the first threshold, whether the steering wheel is in a hands-off state, wherein
when the distance between the first conductive layer and the surface of the steering wheel is less than the distance between the second conductive layer and the surface of the steering wheel, the ratio is positively correlated with the first threshold; or
when the distance between the first conductive layer and the surface of the steering wheel is greater than the distance between the second conductive layer and the surface of the steering wheel, the ratio is negatively correlated with the first threshold.

3. The system according to claim 2, wherein when the first capacitance value or the second capacitance value is greater than or equal to the first threshold, the processing module is configured to determine that the steering wheel is not in a hands-off state; or
when the first capacitance value or the second capacitance value is less than the first threshold, the processing module is configured to determine that the steering wheel is in a hands-off state.

4. The system according to any one of claims 1 to 3, wherein the processing module is further configured to control to output alarm information when determining that the steering wheel is in a hands-off state, and the alarm information indicates that the steering wheel is in a hands-off state.

5. The system according to any one of claims 1 to 4, wherein the first conductive layer and the second conductive layer are flexible conductive layers, and the insulation layer is a compressible and deformable elastic insulation layer.

6. The system according to any one of claims 1 to 5, wherein the first conductive layer comprises multiple first parts, and there is a spacing between any two adjacent parts of the multiple first parts;
the second conductive layer comprises multiple second parts, and there is a spacing between any two adjacent parts of the multiple second parts; and
the multiple first parts and the multiple second parts are mutually staggered.

7. The system according to claim 6, wherein a length of each of the multiple first parts and the multiple second parts is less than a second threshold, wherein the length of each part is a length of the part in a rotation direction of the steering wheel.

8. The system according to any one of claims 1 to 7, wherein the first conductive layer comprises multiple sub-conductive layers, the multiple sub-conductive layers are not electrically connected to each other, the multiple sub-conductive layers are distributed in different regions on the steering wheel along the rotation direction of the steering wheel, and the first capacitance value is a largest capacitance value of multiple capacitance values corresponding to the multiple sub-conductive layers; and
the processing module is further configured to control to output a first instruction based on that largest values of capacitance values of two adjacent sub-conductive layers within preset time are both greater than or equal to a third threshold.

9. The system according to claim 8, wherein the processing module is further configured to control to output a first sub-instruction or a second sub-instruction based on positions of a first sub-conductive layer and a second sub-conductive layer, wherein the first instruction comprises the first sub-instruction and the second sub-instruction; and
the first sub-conductive layer and the second sub-conductive layer are the two adjacent sub-conductive layers, and time at which a largest capacitance value of the first sub-conductive layer occurs within the preset time is earlier than time at which a largest capacitance value of the second sub-conductive layer occurs within the preset time.

10. The system according to claim 8 or 9, wherein the first instruction comprises: answering an incoming call, declining an incoming call, switching a song, adjusting volume, adjusting an air conditioner temperature, lifting/lowering a window of a vehicle, or adjusting a seat.

11. The system according to any one of claims 1 to 10, wherein when the processing module determines that the steering wheel is not in a hands-off state, the processing module is further configured to control to output a second instruction based on a magnitude of a holding force on the steering wheel or a change status of a magnitude of a holding force on the steering wheel within a preset time range.

12. The system according to claim 11, wherein the processing module is further configured to: determine a mapping coefficient based on the ratio, and determine the magnitude of the holding force on the steering wheel based on the mapping coefficient and the first capacitance value.

13. A steering wheel hands-off detection method, applied to a processing module in a steering wheel hands-off detection system, wherein the system comprises a first conductive layer, a second conductive layer, an insulation layer, and the processing module, the insulation layer is disposed between the first conductive layer and the second conductive layer, and a distance between the first conductive layer and a surface of a steering wheel is different from a distance between the second conductive layer and the surface of the steering wheel; and
the method comprises:
obtaining a first capacitance value and a second capacitance value, wherein the first capacitance value is a capacitance value of the first conductive layer, and the second capacitance value is a capacitance value of the second conductive layer; and
determining, based on a ratio of the first capacitance value to the second capacitance value, whether the steering wheel is in a hands-off state.

14. The method according to claim 13, wherein the determining, based on a ratio of the first capacitance value to the second capacitance value, whether the steering wheel is in a hands-off state is specifically:
determining a first threshold based on the ratio of the first capacitance value to the second capacitance value, and determining, by comparing the first capacitance value or the second capacitance value with the first threshold, whether the steering wheel is in a hands-off state, wherein
when the distance between the first conductive layer and the surface of the steering wheel is less than the distance between the second conductive layer and the surface of the steering wheel, the ratio is positively correlated with the first threshold; or
when the distance between the first conductive layer and the surface of the steering wheel is greater than the distance between the second conductive layer and the surface of the steering wheel, the ratio is negatively correlated with the first threshold.

15. The method according to claim 14, wherein the determining, by comparing the first capacitance value or the second capacitance value with the first threshold, whether the steering wheel is in a hands-off state comprises:
when the first capacitance value or the second capacitance value is greater than or equal to the first threshold, determining that the steering wheel is not in a hands-off state; or
when the first capacitance value or the second capacitance value is less than the first threshold, determining that the steering wheel is in a hands-off state.

16. The method according to any one of claims 13 to 15, wherein the method further comprises:
when it is determined that the steering wheel is in a hands-off state, controlling to output alarm information, wherein the alarm information indicates that the steering wheel is in a hands-off state.

17. The method according to any one of claims 13 to 16, wherein the first conductive layer comprises multiple sub-conductive layers, the multiple sub-conductive layers are not electrically connected to each other, the multiple sub-conductive layers are distributed in different regions on the steering wheel along a rotation direction of the steering wheel, and the first capacitance value is a largest capacitance value of multiple capacitance values corresponding to the multiple sub-conductive layers; and
the method further comprises:
controlling to output a first instruction based on that largest values of capacitance values of two adjacent sub-conductive layers within preset time are both greater than or equal to a third threshold.

18. The method according to claim 17, wherein the method further comprises:
controlling to output a first sub-instruction or a second sub-instruction based on positions of a first sub-conductive layer and a second sub-conductive layer, wherein the first instruction comprises the first sub-instruction and the second sub-instruction; and
the first sub-conductive layer and the second sub-conductive layer are the two adjacent sub-conductive layers, and time at which a largest capacitance value of the first sub-conductive layer occurs within the preset time is earlier than time at which a largest capacitance value of the second sub-conductive layer occurs within the preset time.

19. The method according to claim 17 or 18, wherein the first instruction comprises: answering an incoming call, declining an incoming call, switching a song, adjusting volume, adjusting an air conditioner temperature, lifting/lowering a window of a vehicle, or adjusting a seat.

20. The method according to any one of claims 13 to 19, wherein the method further comprises:
when it is determined that the steering wheel is not in a hands-off state, controlling to output a second instruction based on a magnitude of a holding force on the steering wheel or a change status of a magnitude of a holding force on the steering wheel within a preset time range.

21. The method according to claim 20, wherein the method further comprises:
determining a mapping coefficient based on the ratio, and determining the magnitude of the holding force on the steering wheel based on the mapping coefficient and the first capacitance value.

22. A steering wheel hands-off detection apparatus, comprising a memory and a processor, wherein the memory stores code, the processor is configured to execute the code, and when the code is executed, the apparatus performs the method according to any one of claims 13 to 21.

23. A computer storage medium, wherein the computer storage medium stores instructions, and when the instructions are executed by a computer, the computer is enabled to perform the method according to any one of claims 13 to 21.

24. A computer program product, wherein the computer program product stores instructions, and when the instructions are executed by a computer, the computer is enabled to perform the method according to any one of claims 13 to 21.
